(19) Europäisches Patentamt
European Patent Office
Office européen des brevets

(11) **EP 3 094 995 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(51) Int Cl.:
**G01V 5/00** *(2006.01)*

(21) Anmeldenummer: **15700396.3**

(22) Anmeldetag: **16.01.2015**

(86) Internationale Anmeldenummer:
**PCT/EP2015/050773**

(87) Internationale Veröffentlichungsnummer:
**WO 2015/107150 (23.07.2015 Gazette 2015/29)**

(54) **VERFAHREN UND RÖNTGENPRÜFANLAGE, INSBESONDERE ZUR ZERSTÖRUNGSFREIEN INSPEKTION VON OBJEKTEN**

METHOD AND X-RAY INSPECTION SYSTEM, IN PARTICULAR FOR NON-DESTRUCTIVELY INSPECTING OBJECTS

PROCÉDÉ ET INSTALLATION D'INSPECTION AUX RAYONS X, EN PARTICULIER POUR L'INSPECTION SANS DESTRUCTION D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2014 DE 102014200679**

(43) Veröffentlichungstag der Anmeldung:
**23.11.2016 Patentblatt 2016/47**

(73) Patentinhaber: **Smiths Heimann GmbH**
**65205 Wiesbaden (DE)**

(72) Erfinder:
• **DREISEITEL, Pia**
**65760 Eschborn (DE)**
• **KÖNIG, Sebastian**
**65183 Wiesbaden (DE)**
• **MADER, Andreas**
**65468 Trebur (DE)**
• **NAUMANN, Dirk**
**64653 Lorsch (DE)**
• **NITTIKOWSKI, Jörg**
**65329 Hohenstein-Holzhausen (DE)**

(74) Vertreter: **Klunker IP**
**Patentanwälte PartG mbB**
**Destouchesstraße 68**
**80796 München (DE)**

(56) Entgegenhaltungen:
**WO-A1-00/42566    WO-A2-2012/110898**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Die Erfindung betrifft im Allgemeinen ein Verfahren bzw. eine Röntgenprüfanlage zur zerstörungsfreien Inspektion von Objekten. Die Erfindung betrifft im Besonderen ein Verfahren bzw. eine Röntgenprüfanlage, bei dem bzw. der Informationen betreffend das von außen nicht einsehbare Innere eines Objekts mittels wenigstens einer rotierenden Strahlungsquelle und wenigstens einer feststehenden Strahlungsquelle ermittelt werden.

Hintergrund der Erfindung

DE 101 49 254 A1 zeigt eine Röntgenprüfanlage mit mehreren feststehenden Röntgenstrahlungsebenen zur Inspektion von Objekten. Im Betrieb wird ein Inspektionsobjekt durch die mehreren Strahlungsebenen gefördert, die jeweils von einer zugehörigen ortsfesten Strahlungsquelle abgegeben werden. Intensitäten nicht absorbierter Röntgenstrahlen von den jeweiligen Strahlungsquellen werden mit zugeordneten Detektoranordnungen gemessen, anschließend ausgewertet und zumindest ein zweidimensionales Bild des Inneren des Objekts erstellt, um basierend auf einem Wert einer Materialgröße, der aus den Intensitätsmessungen bestimmt wird, ein räumliches Gebiet des Bildes zur Überprüfung zu bestimmen.

US 7 362 847 B2 zeigt eine Röntgenprüfanlage von der Art eines Computertomografen mit einer rotierenden Gantry zur Inspektion von Objekten. Im Betrieb wird ein Inspektionsobjekt durch mehrere Strahlungsebenen gefördert, die jeweils von an der Gantry befestigten und um das zu inspizierende Objekt rotierenden Strahlungsquellen abgegeben werden. Intensitäten nicht absorbierter Strahlen werden mit gegenüber den Strahlungsquellen ebenfalls an der Gantry angeordneten Detektoranordnung gemessen und ausgewertet, um ein dreidimensionales Bild des Inneren des Objekts zu erstellen.

US 7 324 625 B2 zeigt eine Röntgenprüfanlage, bei der ein zu inspizierendes Objekt nacheinander von Röntgenstrahlen einer feststehenden Strahlungsquelle und anschließend von Röntgenstrahlen einer an einer Gantry befestigten und um das zu inspizierende Objekt rotierenden Strahlungsquelle durchstrahlt wird. Basierend auf einem dabei erzeugten zweidimensionalen hoch aufgelösten Projektionsbild sowie einem Computertomografiebild mit niedrigerer Auflösung wird eine Darstellung eines Gegenstands in dem Objekt zusammen mit einer Anzeige der effektiven Atomzahl seines Materials erstellt.

US 2005/0180542 A1 zeigt ein Inspektionssystem zur Identifikation eines Gegenstands innerhalb eines umschlossenen Objekts. Dazu weist das System ein Erfassungsuntersystem mit einem Computertomographen und ein Subsystem mit einer alternativen Modalität auf. Die alternative Modalität umfasst einen Detektor, der an einer drehbaren Gantry angebracht ist. Der Detektor kann eine Quadrupol-Resonanzeinheit, ein Dual-Energy-Röntgengerät oder ein Rückstreuröntgengerät sein. Das Erfassungsuntersystem analysiert das Objekt und unterscheidet interessierende Bereichen, die beispielsweise Schmuggelgüter enthalten könnten, von nicht interessierenden Bereichen, weil diese wahrscheinlich keine Schmuggelgüter enthalten. Der Gegenstand wird anschließend zu dem Subsystem mit der alternativen Modalität transportiert, an dem der Detektor nur den interessierenden Bereiche weitergehend analysiert. US 7 023 957 B2 betrifft ein ähnliches System, bei dem in einer Vorstufe ein normaler Röntgenscanner zur Erfassung von Vorinformationen verwendet wird und in einer weiteren Stufe das Objekt mit einem Computertomographen unter Berücksichtigung Vorinformationen untersucht wird.

US 2005/0058242 A1 offenbart ebenfalls ein Inspektionssystem zum Identifizieren eines eine mögliche Bedrohung darstellenden Gegenstands, der sich verdeckt in einem Objekt befindet. Dazu weist das System eine erste Stufe zur schnellen Erkennung der Position des Gegenstands in dem Objekt und eine zweite Stufe zur genauen Identifikation der Art des Gegenstands auf. Die erste Stufe ist ein Inspektionssystem mit mindestens zwei Röntgenprojektionssystemen, um einen ersten Datensatz zu erzeugen. Basierend auf dem ersten Datensatz werden mindestens zwei Bildern zu erzeugt. Mittels der Bilder wird mindestens ein Zielbereich in dem Objekt, in dem sich der Gegenstand befindet, bestimmt. Die zweite Stufe ist ein weiteres Prüfsystem mit einem Inspektionsbereich, der relativ zu dem Zielbereich positioniert und dem Zielbereich zumindest teilweise entspricht. Mit dem weiteren Prüfsystem wird ein zweiter Datensatz des Inspektionsbereichs erzeugt, dessen Daten spezifisch für das Material in dem Inspektionsbereich sind.

WO 00/42566 A1 offenbart eine Vorrichtung und ein Verfahren zum Identifizieren und Klassifizieren von Objekten, die in CT-Daten repräsentiert sind, für einen Bereich unter Orientierung an der Form des Objekte. Dabei wird zuerst ein durch CT-Daten für eine Region repräsentiertes Objekt identifiziert. Als nächstes wird eine zweidimensionale Projektion des Objekts entlang einer Hauptachse des Objekts erzeugt, wobei die Hauptachse durch die Berechnung von Eigenvektoren einer Kovarianzmatrix von Raumorten von Voxeln in den dem Objekt zugeordneten CT-Datenbestimmt wird und der kleinste Eigenvektor als Hauptachse des Objekts gewählt wird.

WO 2012/110898 A2 offenbart ein Verfahren zum Analysieren eines Zielobjekts unter Verwendung mehrerer Scanner, wobei: zunächst ein Gegenstandes, der ein Material umfasst, bereitgestellt wird; ein erster Satz von Abtastdaten erfasst wird, die dem Gegenstand zugeordnet sind, unter Verwendung eines ersten Scanners; ein zweiter Satz von Abtastdaten erfasst wird, die dem Gegenstand zugeordnet sind, unter Verwendung eines zweiten Scanners; ein erster Satz von Transformationsdaten aus dem ersten Satz von Abtastdaten erzeugt wird; der erste Satz von Transformationsdaten analysiert wird, um eine Untermenge des ersten Satzes von Transformationsdaten zu identifizieren, die mit einem ersten Bereich assoziiert sind; der zweite Satz von Abtastdaten analysiert wird, um eine Untermenge des zweiten Satzes von Abtastdaten zu identifizieren, die mit einem zweiten Bereich assoziiert sind; ein Maß erzeugt wird, das anzeigt, ob zumindest ein Teil der Abtastdaten mit dem Vorhandensein eines Kandidatenmaterials in dem Gegenstand übereinstimmt, wobei der Teil der Abtastdaten aus einer Untermenge des ersten Satzes von Transformationsdaten und/oder der Untermenge des zweiten Satzes von Abtastdaten besteht.

Hersteller gattungsgemäßer Röntgenprüfanlagen zur automatischen zerstörungsfreien Inspektion von Objekten sind ständig bestrebt, die Nachkontrollrate der inspizierten Objekte bei gleich hoher Erkennungsrate, d.h. Detektionssicherheit hinsichtlich der zu detektierenden Merkmale eines Objekts, zu verbessern. Von besonderer Bedeutung ist dabei oft, dass eine Prüfanlage selbstständig, d.h. weitestgehend ohne Einschaltung eines menschlichen Operators zuverlässig, Objekte inspizieren kann.

Zusammenfassung der Erfindung

Es ist eine mögliche Aufgabe der vorliegenden Erfindung, ein Verfahren sowie eine Vorrichtung zur zerstörungsfreien Inspektion von Objekten vorzuschlagen, bei dem bzw. der bei einer vorbestimmten Detektionssicherheit der Durchsatz inspizierter Objekte verbessert ist. Diese Aufgabe wird mit den Merkmalen des Verfahrens gemäß dem unabhängigen Anspruch 1 und der Vorrichtung gemäß dem Anspruch 9 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung zur zerstörungsfreien Inspektion eines Objekts und jeweils umgekehrt, sodass bezüglich der Offenbarung der einzelnen Erfindungsaspekte stets wechselseitig Bezug genommen wird bzw. werden kann.

Ein erster Aspekt betrifft Verfahren zur zerstörungsfreien Inspektion eines Objekts, wobei das Objekt mit elektromagnetischer Strahlung durchstrahlt wird und Intensitätswerte nicht absorbierter Strahlen gemessen und ausgewertet werden, wobei das Verfahren die folgenden Schritte aufweist: (i) Erzeugen eines dreidimensionalen Datensatzes, in dem einzelnen Raumelementen des Objektes jeweils ein einer ersten Materialeigenschaft des Objekts entsprechender erster Materialgrößenwert mittels eines Computertomografieverfahrens zugeordnet ist; (ii) Bestimmen, in dem das Objekt repräsentierenden dreidimensionalen Datensatz, eines Prüfraums mit Raumelementen, deren erster Materialgrößenwert in einem vorbestimmten Wertebereich liegt; (iii) Ableiten von Werten basierend auf dem dreidimensionalen Datensatz, die jeweils einer räumlich geometrischen Größe des Prüfraums in einer vorbestimmten Projektionsrichtung entsprechen; (iv) Erzeugen eines zweidimensionalen Datensatzes, in dem einzelnen Flächenelementen des Objekts jeweils ein einer zweiten Materialeigenschaft des Objekts entsprechender zweiter Materialgrößenwert basierend auf einer Flächenprojektion des Objekts in der vorbestimmten Projektionsrichtung mittels eines zweidimensionalen Röntgenverfahrens zugeordnet ist; (v) Bestimmen eines Prüfbereichs in dem zweidimensionalen Datensatz, indem eine Projektion des Prüfraums, der vorbestimmten Projektionsrichtung entsprechend, in den zweidimensionalen Datensatz berechnet wird; und (vi) Übertragen bzw. Zuordnen der abgeleiteten Werte der räumlich geometrischen Größe in den zweidimensionalen Datensatz bzw. zu jeweils entsprechende Flächenelemente der Projektion. Erzeugen des dreidimensionalen Datensatzes bedeutet, dass in einem Datensatz für Raumkoordinaten, die einzelne Raumelemente (Voxel) des Objektes repräsentieren, jeweils ein der für das jeweilige Raumelement ermittelter erster Materialgrößenwert gespeichert wird.

Erzeugen des zweidimensionalen Datensatzes bedeutet, dass in einem Datensatz für Raumkoordinaten, die einzelne Flächenelemente einer zweidimensionalen Projektion des Objektes repräsentieren, jeweils ein der für das jeweilige Flächenelement ermittelter zweiter Materialgrößenwert gespeichert wird.

Die mittels dem Computertomographieverfahren ermittelten Werte für die räumlich geometrische Größe des Prüfraums können zusammen mit den mittels dem zweidimensionale Röntgenverfahren ermittelten zweiten Materialgrößenwerten des Prüfbereichs ausgewertet werden, um so zuverlässiger und schneller beurteilen zu können, ob der Prüfraum ein Objekt einer bestimmten Kategorie enthält.

Der erste Materialgrößenwert, der mit dem Computertomographieverfahren erfasst wird, ist die örtliche Materialdichte und/oder der Massenschwächungskoeffizienten des einzelnen Raumelements des Objektes sein.

Das zweidimensionale Röntgenverfahren ist ein Mehrenergie-Röntgenverfahren mittels dem jeweils die effektive Ordnungszahl für das den einzelnen Flächenelementen entsprechende, in der vorbestimmten Projektionsrichtung durchstrahlte Material des Objekts als der zweite Materialgrößenwert bestimmt wird.

Basierend auf dem mit dem Computertomographieverfahren erfassten dreidimensionalen Datensatz werden als die räumlich geometrische Größe Werte abgeleitet, die jeweils der Materialdicke des Prüfraums in der vorbestimmten Projektionsrichtung entsprechen. Der mittels des Computertomographieverfahrens erfasste Prüfraum setzt sich aus einer Vielzahl von Raumelementen (Voxel) zusammen. Der Prüfraum wird in die vorbestimmte Projektionsrichtung auf eine Fläche projiziert. Für jedes Flächenelement dieser Projektion kann ein zu dem Flächenelement senkrecht stehender Normalvektor definiert werden, dessen Richtung der Projektionsrichtung entspricht. Ausgehend von jedem Flächenelement kann damit eine in der Projektionsrichtung verlaufende Gerade konstruiert werden, die den Prüfraum in der Projektionsrichtung verläuft. Dabei entspricht der jeweilige Geradenabschnitt, der jeweils im Inneren des Prüfraums verläuft, der oben genannten räumlich geometrischen Größe, d.h. der Materialdicke des Prüfraums im Bereich des zugehörigen Flächenelements.

Gemäß einem zweiten Aspekt des Verfahrens wird ein aktueller Rand der Projektion, d.h. die aktuelle Außenkontur der Projektion (kurz: aktuelle Projektion) des Prüfraums im zweidimensionalen Datensatz korrigiert, d.h. eine Randkorrektur durchgeführt. Es sei angemerkt, dass dieser Rand auch einer Dickenänderung eines untersuchten Gegenstands im Objekt entsprechen kann. Beispielsweise könnte ein Gegenstand in dem zu inspizierenden Objekt aus einem Material bestehen, das Stufen aus diesem Material aufweist. Die Treppenstufen-Ränder sind ebenfalls Rand im Sinn des hier diskutierten Verfahrens. Mit anderen Worten kann das Verfahren auf tatsächliche Ränder angewendet werden, die einen Gegenstand oder Bereich in dem zu inspizierenden Objekt gegenüber seiner Umgebung abgrenzen, und auf Ränder innerhalb eines Gegenstands oder Bereiches gleichermaßen angewendet werden.

Eine erste Randkorrektur kann darin bestehen, dass Flächenelemente überprüft werden, die den aktuellen Rand der Projektion bilden. Dabei wird geprüft, ob den Flächenelementen jeweils ein solcher zweiter Materialgrößenwert zugeordnet ist, der zu dem ersten Materialgrö-ßenwert aus einem vorbestimmten Wertebereich passt. D.h., es erfolgt eine Plausibilitätsprüfung, ob das Wertepaar aus erstem und zweitem Materialgrößenwert physikalisch stimmig ist. Wenn die Überprüfung feststellt, dass dies nicht der Fall ist, dann wird ein solches Flächenelement aus der aktuellen Projektion entfernt. D.h., im Ergebnis wird der aktuelle Rand der Projektion nach innen zurückgenommen, die Projektionsfläche bzw. der Prüfbereich verkleinert.

Eine zweite alternative oder zusätzliche Randkorrektur kann darin bestehen, dass Flächenelemente überprüft werden, die an Projektionselemente, die den aktuellen Rand der Projektion bilden, angrenzen. Dabei wird wieder entsprechend der erläuterten Plausibilitätsprüfung geprüft, ob einem solchen Flächenelement jeweils ein solcher zweiter Materialgrößenwert zugeordnet ist, der zu dem ersten Materialgrößenwert aus einem vorbestimmten Wertebereich passt. Wenn die Überprüfung feststellt, dass dies der Fall ist, dann wird ein solches Flächenelemente zu der aktuellen Projektion hinzugefügt. D.h., im Ergebnis wird der aktuelle Rand der Projektion nach außen geschoben, die Projektionsfläche bzw. der Prüfbereich vergrößert.

Projektionselemente entsprechen dabei den bei der Projektion des Prüfraums in der vorbestimmten Projektionsrichtung erzeugten Flächenelementen.

Gemäß einem dritten Aspekt kann das Verfahren eine weitere alternative oder zusätzliche Randkorrektur aufweisen. Dabei wird der aktuelle Rand der Projektion basierend auf einer Auswertung lokaler Unterschiede bei der jeweils zugeordneten räumlich geometrischen Größe zwischen benachbarten Flächenelementen korrigiert. Dieses Vorgehen eignet sich besonders, um Ränder innerhalb eines Gegenstandes oder Bereiches zu korrigieren, die durch eine Dickenänderung im untersuchten Gegenstand hervorgerufen wurden.

Ausgehend vom projizierten Rand des zu untersuchenden Objektes können im 2D-Bild lokal benachbarte Änderungen, beispielsweise mit einem Gradienten-Filter, gesucht und hinsichtlich der Ähnlichkeit des projizierten Randes mit verschiedenen Kriterien bewertet werden. Die jeweiligen Teilbewertungen können in einer Kostenfunktion zusammengefasst werden, indem Einzelterme auf den Wertebereich [0,1] normiert und schließlich addiert, multipliziert oder über Fuzzy-Operationen zusammengefasst werden. Die Einzelterme können einen oder mehrere der folgenden umfassen: die absoluten Gradientenwerte, die Gradientenwerte relativ zum projizierten Gradienten, den lokalen Winkel der Kanten zueinander sowie die räumliche Distanz. Zusätzlich wird noch die Umgebung der untersuchten Kante hinsichtlich ihres Rauschverhaltens bewertet. Diese Kombination liefert dann in der unmittelbaren Umgebung des projizierten Randes den wahrscheinlichsten korrespondierenden Rand im 2D-Bild.

Gemäß einem vierten Aspekt können den Flächenelementen des Prüfbereichs zugeordnete Daten unter Berücksichtigung deren Zuverlässigkeit bzw. von Zusatzinformationen korrigiert werden. Hierzu können die ersten und zweiten Materialgrößenwerte sowie die Werte der abgeleiteten räumlich geometrischen Größe für die einzelnen Flächenelemente der Projektion unter Verwendung einer Kostenfunktion gewichtet werden. Als Parameter wird hierbei wenigstens einer der folgenden verwendet: der Qualität der einzelnen Messungen, dem Rauschpegel der Daten, den Materialgrößenwerten von in der vorbestimmten Projektionsrichtung hinter dem Prüfraum liegenden Materials, den Materialgrößenwerten von in der vorbestimmten Projektionsrichtung vor dem Prüfraum liegenden Materials, der lokalen Homogenität des zweidimensionalen Datensatzes, einem Konfidenzwert der Materialbestimmung und dergleichen. Die einzelnen Parameter werden bevorzugt normiert kombiniert. Die Kombination kann beispielsweise multiplikativ, additiv oder nach Regeln der Fuzzy-Logik erfolgen. Diese Maßnahme dient zur Stabilisierung der lokal bestimmten Materialwerte, insbesondere in überlagerten Bereichen oder bei geringen Materialänderungen.

Gemäß einem fünften Aspekt kann weiter eine statistische Auswertung der Werte wenigstens einer der folgenden Mengen erfolgen: (i) der ersten Materialgrößenwerte, der zweiten Materialgrößenwerte und der Werte der abgeleiteten räumlich geometrischen Größe, wie z. B. den Materialdickenwerten für Flächenelemente der Projektion. Beispielsweise können diese Werte jeweils mittels einer Histogramm-Auswertung, d.h. einer Auswertung basierend auf einer Histogramm-Bildung, analysiert werden. Dabei kann jeweils der wahrscheinlichste, z.B. der häufigste Wert, allen Flächenelementen der Projektion zugewiesen werden. Diese Maßnahme ist vorteilhaft, wenn in Bereichen falsche Materialwerte vorliegen, da durch die Histogramm-Bildung seltene fehlerhafte Materialwerte kaum Einfluss haben. Wenn die ermittelten Randelemente tatsächlich alle am tatsächlichen Rand eines Gegenstandes liegen, sollten die Materialwerte im Prinzip alle gleich sein. Die Histogramm-Analyse ist besonders tolerant gegenüber einzelnen Fehlern, wie z. B. bei einer Überlagerung verschiedener Materialien im Röntgenbild. Diese Maßnahme ist besonders vorteilhaft, wenn man sich nicht sicher sein kann, dass alle untersuchten Randbereiche tatsächlich am gleichen Gegenstand bzw. dessen Rand liegen.

Gemäß einem sechsten Aspekt kann das Verfahren so ausgelegt sein, dass mehrere Flächenprojektionen des Prüfraums für verschiede Projektionsrichtungen sowie zugehörige Flächenprojektionen des Objekts gemeinsam ausgewertet werden. Dabei können alle Flächenprojektionen in die oben beschriebene statistische Auswertung einbezogen werden, wobei die Einzelbeiträge zu den Histogrammen der jeweiligen Projektionen in ein gemeinsames Histogramm des Gegenstandes zusammengeführt werden können. Diese Zusammenführung kann wiederum sowohl gewichtet als auch ungewichtet erfolgen.

Gemäß einem siebten Aspekt kann der Prüfbereich basierend auf der Größe des Prüfbereichs und/oder einem durchschnittlichen Wert der ersten und/oder zweiten Materialgröße klassifiziert werden.

Schließlich kann vorgesehen sein, dass eine grafische Darstellung des Prüfbereichs für eine Sichtüberprüfung durch einen Operator erfolgt, falls keine eindeutige automatische Klassifizierung des Prüfbereichs möglich ist.

Ein weiterer Aspekt betrifft eine Vorrichtung zur zerstörungsfreien Inspektion eines Objekts, in der das Objekt mit elektromagnetischer Strahlung durchstrahlt wird und Intensitäten nicht absorbierter Strahlen gemessen und ausgewertet werden. Die Vorrichtung weist bevorzugt ein Datenverarbeitungssystem auf, welches betriebsmäßig gekoppelt ist mit einer ersten Röntgeneinheit zur Erfassung des das Objekt repräsentierenden dreidimensionalen Datensatzes mit den Raumelementen, denen jeweils eine erste Materialgröße zugeordnet ist, und mit wenigstens einer zweiten Röntgeneinheit zur Erfassung des zweidimensionalen Datensatzes mit den Flächenelementen, denen jeweils eine zweite Materialgröße zugeordnet ist, wobei der zweidimensionale Datensatz eine Flächenprojektion des Objekts in der vorbestimmten Projektionsrichtung repräsentiert. Das Datenverarbeitungssystem ist bevorzugt für die Durchführung eines Verfahrens gemäß einem der vorstehenden Aspekte eins bis sieben eingerichtet.

Die Vorrichtung kann weiter aufweisen: einen feststehenden Teil, einen Strahlentunnel und eine durch den Strahlentunnel führende Transporteinrichtung. Die erste Röntgeneinheit kann eine an dem feststehenden Teil gelagerte und um den Strahlentunnel drehbare Gantry aufweisen. An der Gantry können wenigstens eine erste Strahlungsquelle für elektromagnetische Strahlung in einer Rotationsebene und eine der ersten Strahlungsquelle gegenüberliegend angeordnete und zugeordnete Detektoreinheit befestigt sein. Die wenigstens eine zweite Röntgeneinheit kann wenigstens eine gegenüber dem Strahlentunnel feststehend angeordnete zweite Strahlungsquelle für elektromagnetische Strahlung und eine zugeordnete, feststehend angeordnete zweite Detektoreinheit aufweisen.

Ein weiterer Aspekt ist ein Computerprogrammprodukt mit einem Computerprogramm, das Softwaremittel zur Durchführung eines Verfahrens gemäß einem der oben erläuterten Aspekte eins bis sieben aufweist, wenn das Computerprogramm in einem Automatisierungssystem ausgeführt wird. Das Automatisierungssystem kann beispielsweise eine Steuereinheit für die oben beschriebene Vorrichtung zur zerstörungsfreien Inspektion eines Objekts sein.

Als durchdringende elektromagnetische Strahlung werden bevorzugt Strahlen mit einer Wellenlänge im Bereich von 10 Nanometer bis 10 Picometer bzw. Frequenzen von 2,5x1 0E17 Hz bis 6x10E19 Hz verwendet, die allgemein auch Röntgenstrahlen genannt werden. Die hierfür verwendeten Strahlungsquellen geben Röntgenstrahlen bevorzugt in einem Energiebereich bis maximal 180 keV ab. Anlagen, in denen Röntgenstrahlen zur zerstörungsfreien Durchstrahlung eingesetzt werden, werden oft als Röntgenprüfanlagen, Röntgeninspektionsanlagen oder ähnlich bezeichnet.

Das erfindungsgemäße Verfahren bzw. eine damit ausgestattete Vorrichtung, beispielsweise eine Röntgenprüfanlage, erreicht eine höhere Aufklärungsrate inspizierter Objekte bei gleich hoher Erkennungsrate hinsichtlich der interessierenden Eigenschaften oder Merkmale eines Objekts. Dabei kann die Vorrichtung weitestgehend ohne Einschaltung eines menschlichen Operators zuverlässig Objekte entsprechend den Zielvorgaben inspizieren, analysieren und klassifizieren.

Die erfindungsgemäßen Verfahren können grundsätzlich mittels entsprechender Softwareprogramme in einem Datenverarbeitungssystem in einer oder verteilt auf mehrere programmierbare Recheneinheiten implementiert werden. Das Datenverarbeitungssystem ist dann im Wesentlichen zur Durchführung des beschriebenen Verfahrens oder Teilen davon konfiguriert, d.h. programmiert.

Eine Recheneinheit kann beispielsweise mit einem oder mehreren Prozessoren in bekannter Weise nach Art eines Computersystems aufgebaut sein, d.h.

mit dem oder den Prozessoren als zentrale Recheneinheit sowie mit internem Speicher und/oder externem Speicher, der für die Software nicht flüchtig und für Arbeitsdaten nach Art eines RAM (Random-Access-Memory) eingerichtet ist, ausgestattet sein. Zur Interaktion mit funktionalen Bestandteilen der Vorrichtung ist das Datenverarbeitungssystem über Kommunikationsschnittstellen beispielsweise mit einer zentralen Steuereinheit der Röntgenprüfanlage verbunden.

Alternativ können die Verfahren oder einzelne, z.B. zeitkritische, Verfahrensschritte direkt mittels entsprechender digitaler elektronischer Schaltungen, beispielsweise mittels fest verdrahteter Logikbausteine bzw. konfigurierbarer Logikbausteine implementiert sein. Letztere können flexibel mittels integrierter Schaltkreise der Digitaltechnik implementiert werden, in die eine gewünschte logische Schaltung programmiert werden kann.

Beispielsweise kann zur Implementierung eines der Verfahren oder bestimmter Teile bzw. Schritte davon ein programmierbarer Logikbaustein, z.B. ein PLD (Programmable Logic Device) oder ein FPGA (Field Programmable Gated Array), verwendet werden. Derartig flexibel programmierbare Logikbausteine können durch eine spezifische Konfiguration, d.h. mit einem Konfigurationsprogramm oder einer Konfigurationsdatei, programmiert werden. Anders als bei der Programmierung eines Computers mit einem Computerprogramm als Beispiel für eine Computerimplementierung bezieht sich bei einer derartigen Implementierung der Begriff Programm nur in zweiter Linie auf die Vorgabe zeitlicher Abläufe im Baustein, sondern vor allem auf eine Definition von dessen Funktionsstruktur. Durch die Programmierung von Strukturvorschriften kann die Funktionsweise einzelner universeller Blöcke des Logikbausteins und deren Verschaltung untereinander festgelegt, d.h. konfiguriert werden.

Somit ist eine vollständige Implementierung mittels Computerprogramm, aber auch eine vollständige Implementierung in Hardware sowie jede Mischform zur Durchführung eines der Verfahren möglich. Aufgrund der hohen Bildverarbeitungsanteile in den oben erläuterten Verfahrensschritten können einzelne oder alle Schritte auch zur Ausführung durch auf Bildverarbeitung spezialisierte Hardware, wie graphische Bildverarbeitungsprozessoren (GPUs), in entsprechende Programmbefehl umgesetzt werden.

Die Erfindung eignet sich besonders für Röntgenprüfanlagen, die an Sicherheitsüberprüfungsstellen im Gepäckumschlagsystem, beispielsweise an Flughäfen, eingesetzt werden, um Gepäckstücke und Frachtgüter, die an Bord eines Flugzeugs verbracht werden sollen, automatisch zerstörungsfrei zu inspizieren, d.h. ohne sie zu öffnen. Die Anlage kann auch an anderen Kontrollstellen z.B. an Zugängen zu sicherheitsrelevanten Bereichen oder Gebäuden, an Grenzkontrollstellen etc. zur Inspektion von Objekten, wie von Personen mitgeführtes Handgepäck oder Poststücke wie Briefe, Päckchen und Pakete verwendet werden. Ziel derartiger Inspektionen kann die Entdeckung bestimmter Gegenstände oder Stoffe sein, wie beispielsweise Datenträger, wie beispielsweise DVDs oder CD-ROMs, Waffen, Schmuggelgüter, Drogen, Geld und dergleichen, aber auch die Detektion von Materialen und Substanzen mit Gefährdungspotenzial, wie Sprengstoffe oder Chemikalien. Auch die Detektion von Lebensmitteln ist denkbar.

Ein weiteres Einsatzgebiet für derartige Röntgenprüfanlagen ist die zerstörungsfreie Materialprüfung zur Erkennung äußerlich nicht sichtbarer Fehler, wie Materialschwächen, Bruchstellen, Lunker, Einschlüsse, Porositäten, Formabweichungen oder Ähnliches. Als typisches Beispiel sei die Überprüfung von Maschinenelementen, wie es z.B. Turbinenschaufeln moderner Triebwerke sind, genannt. Ein weiteres Anwendungsbeispiel ist die Prüfung der Qualität von Schweißnähten. Auch ein Einsatz zur Qualitätssicherung bei komplexen elektrischen Bauelementen ist möglich, um z.B. elektrische Bauteile auf Vollständigkeit, korrekte Montage der Einzelteile oder Fehler, wie z.B. Kabelbrüche, defekte Anschlüsse, fehlende Bauteile, falsche Lage der Bauteile, Montagefehler, Brüche in Federteilen, fehlerhafte Lötstellen oder dergleichen, zu kontrollieren.

Schließlich kann die Röntgenprüfanlage auch zur Gewährleistung der Produktsicherheit für die Detektion von Fremdkörpern an verschiedenen Stellen einer Produktionslinie eingesetzt werden. Ein mögliches Beispiel hierfür ist die Detektion von Glasscherben in Lebensmitteln.

Kurzbeschreibung der Zeichnungsfiguren

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben", "unten" beziehen sich auf die Zeichnungen in einer Ausrichtung mit normal lesbarer Figurenbezeichnung bzw. normal lesbaren Bezugszeichen.

Figur 1 zeigt schematischeine Röntgenprüfanlage gemäß der Erfindung.

Figur 2 zeigt schematisch ein Blockschaltbild eines Datenverarbeitungssystems zur erfindungsgemäßen Verarbeitung von über ein zu inspizierendes Objekt in einem dreidimensionalen und wenigstens einem zweidimensionalen Datensatz erfasster Daten.

Figuren 3a bis 3f veranschaulichen einzelne Verarbeitungsschritte für Daten des dreidimensionalen und des wenigstens einen zweidimensionalen Datensatzes.

## Detaillierte Beschreibung der Ausführungsbeispiele

In der nachfolgenden Beschreibung werden zahlreiche spezifische Einzelheiten dargelegt. Es versteht sich jedoch, dass weitere Ausführungsformen auch ohne diese spezifischen Einzelheiten möglich sind. Dem Fachmann bekannte Schaltungen, Strukturen und Verfahren werden hier nicht im Detail besprochen, um das Verständnis der vorliegenden Beschreibung nicht unnötig zu erschweren.

Begriffe "gekoppelt" und "verbunden/angeschlossen" sowie davon abgeleitete Begriffe werden hier nicht synonym verwendet. Bei spezifischen Ausführungsformen kann vielmehr "verbunden/angeschlossen" andeuten, dass zwei oder mehr Elemente in direktem physischem oder elektrischem Kontakt miteinander stehen. "Gekoppelt" kann bedeuten, dass zwei oder mehr Elemente zusammenwirken oder sich gegenseitig beeinflussen, wobei sie in direktem, aber auch indirektem physischem oder elektrischem Kontakt miteinander stehen können. Falls nicht anderweitig angegeben, deutet der Gebrauch der Ordinaladjektive "erster", "zweiter", "dritter" usw. zur Bezeichnung eines gemeinsamen Objekts lediglich an, dass auf verschiedene Beispiele von gleichartigen Objekten Bezug genommen wird, und soll nicht implizieren, dass die so bezeichneten Objekte in einer gewissen zeitlichen, räumlichen, Rangordnungs- oder sonstigen Reihenfolge auftreten müssen.

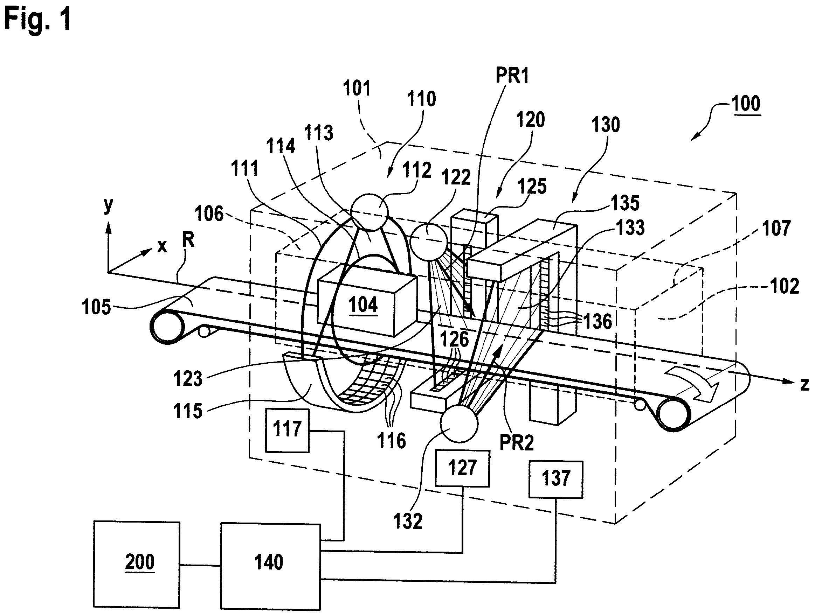

Figur 1 zeigt schematisch eine Anlage zur Inspektion von Objekten (Inspektionsobjekte) mittels durchdringender elektromagnetischer Strahlung in Form von Röntgenstrahlen.

Die Röntgenprüfanlage 100 der Figur 1 weist einen feststehenden Teil 101 und einen die Anlage im Wesentlichen horizontal durchlaufenden Strahlentunnel 102 mit im Wesentlichen rechteckigem Querschnitt auf. Durch den Strahlentunnel 102 kann ein zu inspizierendes Objekt 104 - im Beispiel ein Koffer - mittels einer Transporteinrichtung 105, beispielsweise einem Bandförderer, von einem Eingang 106 zu einem Ausgang 107 transportiert werden. Zur Orientierung ist in Figur 1 ein xyz-Koordinatensystem definiert. Die z-Richtung entspricht der Förderrichtung der Transporteinrichtung 105. Die x-Richtung verläuft quer zur Förderrichtung und parallel zur Förderebene der Transporteinrichtung 105. Die y-Richtung verläuft jeweils orthogonal zur z- bzw. x-Richtung und bei normaler Aufstellung der Röntgenprüfanlage 100 senkrecht zur Aufstellfläche.

Entlang des Strahlentunnels 102 sind drei Röntgeneinheiten 110, 120, 130 angeordnet. Die erste Röntgeneinheit 110 ist zur Erfassung eines dreidimensionalen Datensatzes für das zu inspizierendes Objekt 104 mittels Computertomografie eingerichtet. Die Röntgeneinheit 110 bestimmt für einzelne Raum- bzw. Volumenelemente (Voxel) als Datenelemente eines dreidimensionalen Datensatzes für das Objekt 104 einen ersten Materialgrößenwert, welcher der örtlichen Materialdichte oder dem örtlichen Massenschwächungskoeffizienten entspricht.

Die beiden weiteren Röntgeneinheiten 120 und 130 sind jeweils zur Bestimmung eines zweidimensionalen, das Objekt 104 repräsentierenden, Datensatzes mittels einer, bevorzugt zeilenweisen, Röntgenprojektion des Objekts 104 für jeweils eine vorbestimmte Projektionsrichtung PR1 bzw. PR2 eingerichtet. Es sei angemerkt, dass anstelle der zwei Röntgeneinheiten, im Ausführungsbeispiel die Einheiten 120 und 130, auch nur eine einzige weitere Röntgeneinheit vorgesehen sein kann, die eingerichtet ist, mehrere Röntgenprojektionen des Objekts 104 für verschiedene vorbestimmte Projektionsrichtungen PR1 bzw. PR2 zu erstellen. Eine derartige Röntgeneinheit ist beispielsweise aus der DE 101 49 254 A1 derselben Anmelderin bekannt.

Im Ausführungsbeispiel handelt es sich bei der zweiten bzw. dritten Röntgeneinheit 120 bzw. 130 um jeweils eine Mehrenergie- bzw. Dual-Energy-Röntgeneinheit, die in der Lage ist, die effektive Kernladungszahl (Ordnungszahl) des durchstrahlten Materials des Objekts 104 für jedes Datenelement des zweidimensionalen Datensatzes als einen zweiten Materialgrößenwert zu bestimmen. Die für einzelne Datenelemente erfassten Intensitäten der Röntgenstrahlen können als Bild wiedergeben werden. Dann entsprechen die einzelnen Datenelemente einzelnen Flächenelementen bzw. Pixel. Zur Bildgebung können beispielsweise bestimmten Intensitätswerten oder zugeordneten Wertebereichen bestimmte Farben und Helligkeitswerte zugeordnet werden.

Die erste Röntgeneinheit 110 besitzt zur Datenerfassung in einer Schnittebene des Objekts 104 eine im Wesentlichen ringförmige Gantry 111, die drehbar um eine Rotationsachse R, die im Wesentlichen in z-Richtung verläuft, gelagert ist. Im Betrieb dreht sich die Gantry 111 um einen von ihr umschlossenen und im Strahlentunnel 102 liegenden Inspektionsbereich 114. Zur Drehung wird die Gantry 111 von einem Motor (nicht gezeigt) mit einer vorzugsweise konstanten, aber einstellbaren Winkelgeschwindigkeit angetrieben. An der Gantry 111 ist eine Strahlungsquelle 112 befestigt, die so um den Inspektionsbereich 114 drehbar ist, dass damit in einer von der Gantry 111 definierten Rotationsebene das Objekt 104 aus allen Raumrichtungen durchstrahlt werden kann.

Die Strahlungsquelle 112 ist ein Röntgenstrahler, beispielsweise in Form einer Röntgenröhren mit Stehanode oder rotierender Anode (z.B. Drehanodenröhren oder Drehkolbenröhren). Die Strahlungsquellen 112 geben Röntgenstrahlen in einem Energiebereich bis maximal 180 keV ab. Die Röntgenröhre befindet sich in einem (in der Figur schematisch als Kugel angedeutetem) Gehäuse.

Um die Emission von Strahlung aus der Anlage zu reduzieren, ist üblicherweise ein Kollimator vorgesehen, der das aus der Strahlungsquelle 112 austretende Strahlenbündel 113 auf einen kleinen Austrittswinkel in einer Ebene (Fächerstrahl) oder einen Kegel (Kegelstrahl) mit kleiner Winkelausdehnung (Divergenz) beschränkt.

Ein kegelförmiges Strahlenbündel hat somit sowohl in der zur Rotationsachse R senkrechten Ebene als auch in Richtung der Rotationsachse R eine von Null verschiedene endliche Ausdehnung (Divergenz), wohingegen ein fächerförmiges Strahlenbündel im Wesentlichen in der zur Rotationsachse R senkrechten Ebene eine von Null verschiedene endliche Ausdehnung und in Richtung der Rotationsachse R eine relativ kleine Ausdehnung hat. Das Strahlenbündel 113 durchdringt den Inspektionsbereich 114 und damit das zu inspizierendes Objekt 104.

Weiter können an der Gantry 111 noch ggf. weitere - hier aus Vereinfachungsgründen nicht dargestellte - Peripheriegeräte und Aggregate angeordnet sein.

Der Inspektionsbereich 114 der Röntgeneinheit 110 ist zylinderförmig, wobei die Längsachse des Zylinders der Rotationsachse R der Gantry 111 bzw. der z-Richtung entspricht.

Nach Durchlaufen des Inspektionsbereichs 114 und des hindurchgeförderten zu inspizieren Objekts 104, treffen die Röntgenstrahlen durch die Dämpfungseigenschaften der auf dem Weg durch das Objekt 104 durchdrungenen Materialien auf eine ebenfalls an der Gantry 111 und der Strahlungsquelle 112 gegenüberliegend befestigte Detektoreinheit 115, die eine Vielzahl von Detektorelementen 116 aufweist.

Die Detektorelemente 116 sind in Detektorzeilen und Detektorspalten angeordnet. Eine Detektorzeile befindet sich in einer zur Rotationsachse R senkrechten Ebene, beispielsweise annähernd auf einem Kreisbogen um die Strahlungsquelle 112, d.h., eine Detektorzeile verläuft in Umfangsrichtung. Die Detektorspalten verlaufen parallel zur Rotationsachse R, d.h. in z-Richtung.

Ein Detektorelement 116 kann beispielsweise ein Gasdetektor, ein Szintillationsdetektor oder ein Halbleiterflächendetektor sein, welcher Röntgenstrahlung empfangen und in einen der Intensität der empfangenen Strahlung entsprechende elektrische Größe (Spannung, Strom) konvertieren kann; geeignete Detektorelemente sind beispielsweise aus der EP 1 186 909 A2 bekannt.

Jedes Detektorelement 116 kann in jeder Umlaufposition der Strahlungsquellen 112 jeweils einen Messwert für auf das Detektorelement 116 treffende Röntgenstrahlen aus dem Strahlenbündel 113 liefern. Somit kann jeder Winkelposition der Strahlungsquelle 112 jeweils ein durch ein bestimmtes Detektorelement 116 erfasster Messwert zugeordnet und gespeichert werden.

Das zu inspizierende Objekt 104 wird mittels der durch einen Motor (nicht gezeigt) angetriebenen Transporteinrichtung 105 parallel zur und in Richtung der Rotationsachse R, d.h. in z-Richtung durch den Inspektionsbereich 114 transportiert. Die Geschwindigkeit des Vorschubs ist vorzugsweise konstant und einstellbar. Wenn der die Gantry 111 antreibende Motor und der die Transporteinrichtung 105 antreibende Motor gleichzeitig laufen, liegen die auszuwertenden Detektorelemente 116 an der Detektoreinheit 115 relativ zum Objekt 104 auf einer Helix-förmigen Bahn.

Die Röntgeneinheit 110 wird von einer ersten Steuereinheit 117 überwacht und gesteuert. Die Strahlungsquelle 112 und die Detektoreinheit 115 sowie andere mit der Gantry 111 rotierende Komponenten können beispielsweise über kontaktlos arbeitende nicht näher dargestellte Schleifringe mit der Steuereinheit 117 mit der Steuereinheit 117 gekoppelt sein. Die Steuereinheit 117 ist weiter über entsprechende Kommunikationsverbindungen mit anderen (in der Figur 1 nicht gezeigten) Sensoren und Aktoren der Röntgeneinheit 110 verbunden. Beispielsweise steuert die Steuereinheit 117 auch den die Gantry 111 drehenden Motor passend zur Geschwindigkeit, mit der die Transporteinrichtung 105 das Objekt 104 fördert.

Die Steuereinheit 117 leitet die erfassten Messwerte der Detektoreinheit 115 über eine Hauptsteuereinheit 140 der Röntgenprüfanlage 100 oder direkt an ein Datenverarbeitungssystem 200 weiter. Dort werden die einzelnen Messwerte mit für den Einsatz in der Computertomografie bekannten Algorithmen zu dem dreidimensionalen Datensatz des Objekts 104 aufbereitet. Selbstverständlich ist es auch möglich, die Steuereinheit 117 der Röntgeneinheit 110 oder die Hauptsteuereinheit 140 der Röntgenprüfanlage 100 mit entsprechender Rechenleistung auszustatten, sodass die Erzeugung des dreidimensionalen Datensatzes bereits dort erfolgen kann.

Bei der zweiten bzw. dritten Röntgeneinheit 120 bzw. 130 wird das Objekt 104 von der Transporteinrichtung 105 durch Röntgenstrahlen gefördert, die jeweils von wenigstens einer ortsfesten Strahlungsquelle 122 bzw. 132 abgegeben werden. Dabei werden jeweils Intensitäten der nicht vom Objekt 104 absorbierten Strahlen der jeweiligen Strahlungsquelle 122 bzw. 132 mittels wenigstens einer zugeordneten Detektoranordnungen 125 bzw. 135 gemessen und ausgewertet.

Bei der Röntgenprüfanlage 100 der Figur 1 als Ausführungsbeispiel enthalten die Röntgeneinheiten 120, 130 jeweils eine ortsfeste Strahlungsquelle 122 bzw. 132 und jeweils eine zugeordnete ortsfeste Detektoranordnung 125 bzw. 135 von denen die Intensitäten der vom Objekt 104 nicht absorbierten Röntgenstrahlen gemessen werden. Die Strahlungsquelle 122 bzw. 132 gibt Röntgenstrahlen in einem Energiebereich bis maximal 140 keV ab. Die Strahlungsquellen 122 bzw. 132 sind jeweils so angeordnet, dass das Objekt 104 jeweils mit einer vorbestimmten Projektionsrichtung PR1 bzw. PR2 durchstrahlt wird, um voneinander unabhängige Intensitätsdaten zu erhalten. Dazu sind die Strahlungsquellen 122 und 132 in Transportrichtung, d.h. z-Richtung, des Objekts 104 mit Abstand hintereinander und an verschiedenen Seiten des Strahlentunnels 102 angeordnet. Somit werden bei der zweiten und dritten Röntgeneinheit 120, 130 Röntgenstrahlen in zwei, bevorzugt fächerförmigen Strahlenebenen 123 bzw. 133 zur Durchstrahlung des Objekts 104 abgegeben, die auf die jeweils zugeordnete Detektoranordnung 125 bzw. 135 ausgerichtet ist.

Bei der Ausführungsform in Figur 1 verläuft die Strahlenebene 123 parallel zur Strahlenebene 133. Grundsätzlich ist es auch möglich, alternativ oder zusätzlich Strahlenebenen vorzusehen, wie beispielsweise in der DE 101 49 254 A1 offenbart, die nicht parallel, d.h. zueinander geneigt verlaufen. Zumindest eine Strahlenebene verläuft bevorzugt senkrecht zur Transportrichtung bzw. z-Richtung des Objekts 104.

Die Detektoranordnungen 125 bzw. 135 enthalten jeweils Detektorelemente 126 bzw. 136 in einer zeilenförmigen Anordnung, die bevorzugt in der Form eines Buchstaben "L", d.h. L-förmig gestaltet ist. Dadurch können alle das Objekt 104 durchdringenden Strahlen bei relativ kleinem Platzbedarf erfasst werden.

Die Detektoranordnungen 125, 135 enthalten bevorzugt Doppeldetektoren, die für eine Erfassung von Intensitätswerten aus wenigstens zwei unterschiedlichen Energiebereichen geeignet sind. Beispielsweise kann jedes Detektorelement 126, 136 für die Erfassung von Röntgenstrahlung aus zwei Teilbereichen bzw. zwei unterschiedlichen Energiebereichen des Röntgenspektrums der Strahlungsquellen 122, 132 eingerichtet sein und einen zugehörigen Messwert liefern. Bevorzugt werden Intensitäten der vom Objekt 104 absorbierten Röntgenstrahlen getrennt für einen hohen und einen niedrigen Energiebereich gemessen. Die dabei erfassten zwei Intensitätswerte ermöglichen eine sogenannte Mehrenergie- bzw. Dual-Energy-Auswertung. Damit kann neben einer wahrscheinlichen Dichte auch die wahrscheinliche effektive Ordnungszahl ($Z_{eff}$) eines durchstrahlten Materials bestimmt werden. Praktisch kann ein Detektorelement 126, 136 aus zwei übereinander angeordneten separaten Einzeldetektoren bestehen; derartige Detektorelemente sind z.B. aus der o.g. EP 1 186 909 A2 bekannt.

Die Röntgeneinheit 120 bzw. 130 wird jeweils von einer zweiten bzw. dritten Steuereinheit 127 bzw. 137 überwacht und gesteuert, die jeweils mit der Strahlungsquelle 122 bzw. 132 und der Detektoreinheit 125 bzw. 135 und ggf. mit anderen Peripheriegeräten und Aggregaten mittels nicht näher dargestellten Datenverbindungen gekoppelt sind.

Die zweite bzw. dritte Steuereinheit 127 bzw. 137 leitet jeweils die erfassten Messwerte der Detektoreinheit 125 bzw. 135 über die Hauptsteuereinheit 140 oder direkt an das Datenverarbeitungssystem 200 weiter. Dort werden die einzelnen Messwerte mit hierfür bekannten Algorithmen zu jeweils einem zweidimensionalen Datensatz des Objekts 104, der im Wesentlichen einer Röntgenprojektion in der jeweiligen Projektionsrichtung PR1 bzw. PR2 entspricht, aufbereitet. Selbstverständlich ist es auch hier - wie bereits im Zusammenhang mit der ersten Röntgeneinheit 110 erläutert - möglich, die Steuereinheit 127 bzw. 137 der Röntgeneinheit 120 bzw. 130 oder die Hauptsteuereinheit 140 der Röntgenprüfanlage 100 derart mit entsprechender Rechenleistung auszustatten, sodass die Erzeugung des jeweiligen zweidimensionalen Datensatzes bereits dort erfolgen kann.

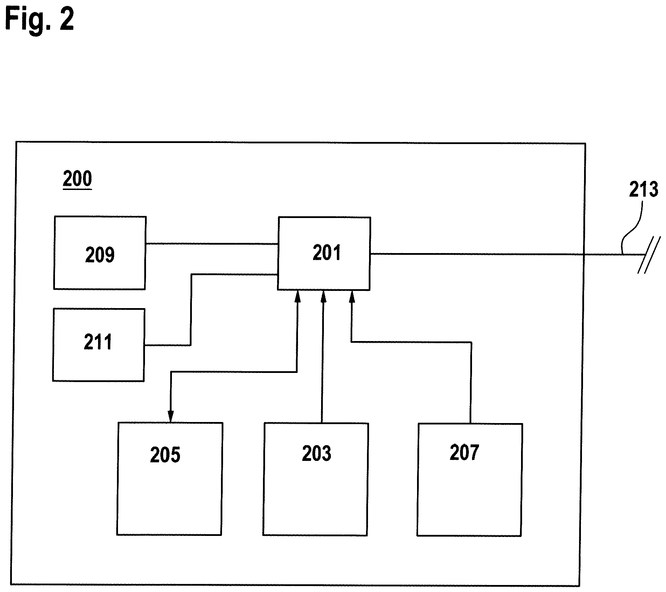

Figur 2 zeigt schematisch ein mögliches Blockschaltbild des Datenverarbeitungssystems 200 zur weiteren Verarbeitung und Auswertung der erfassten Datensätze. Es versteht sich, dass grundsätzlich eine Verarbeitung der durch die Röntgeneinheiten 110, 120, 130 erfassten Datensätze in einem Datenverarbeitungssystem 200 erfolgen kann, welches lokal in oder an der Röntgenprüfanlage 100 angeordnet ist. Es ist aber auch möglich, dass das Datenverarbeitungssystem 200, beispielsweise über ein Computernetzwerk gekoppelt, an einem zentralen Ort nach Art eines Mainframe-Computersystems zentral, insbesondere für die Auswertung der Daten-sätze mehrerer Röntgenprüfanlagen 100, angeordnet ist. Es ist auch möglich, dass das Datenverarbeitungssystem 200 von mehreren miteinander über ein Computernetzwerk verbundenen und somit räumlich verteilten Computersystemen gebildet wird. Daher zeigt die Figur 2 im Wesentlichen nur die grundsätzlichen Bestandteile des Datenverarbeitungssystems 200, die zur Implementierung notwendig sind.

Für die Ausführung einzelner Schritte der hier vorgeschlagenen Auswertung der mittels der Röntgeneinheiten 110, 120, 130 erfasster Datensätze für das zu inspizierende Objekt 104 ist daher wenigstens ein Prozessor 201 vorgesehen. In wenigstens einem ersten Speicher 203 sind Softwaremittel, beispielsweise ein Computerprogramm zur Durchführung eines der im Folgenden am Ausführungsbeispiel erläuterten Verfahren abgelegt, wenn das Computerprogramm in dem wenigstens einen Prozessor 201 ausgeführt wird. Wenigstens ein zweiter Speicher 205 ist als Arbeitsspeicher für die zu verarbeitenden Datensätze und die Zwischen- bzw. Endergebnisse vorgesehen. Ein dritter Speicher kann vorgesehen sein, in dem Vergleichswerte für spezifische Materialgrößenwerte in Form einer Datenbank hinterlegt sind; dies können beispielsweise spezifische, die Absorption von Röntgenstrahlen beeinflussende Größen bekannter Materialen, insbesondere die Dichte und/oder der Massenschwächungskoeffizient dieser Materialien sein.

Weiter besitzt das Datenverarbeitungssystem 200 Eingabemittel 209, wie beispielsweise eine Tastatur, ein Touchpad, eine Zeigereingabeeinheit (z.B. eine Computermaus) oder dergleichen bzw. eine spezifisch auf eine einfache Bedienung abgestimmte Variante einzelner dieser Mittel bzw. Kombination davon. Zur Ausgabe von Meldungen bzw. Anzeigen sowie zur Visualisierung von einzelnen in dem Objekt 104 enthaltenen Gegenständen bzw. dem Inneren des Objekts 104 ist ein bildgebendes Ausgabemittel, wie beispielsweise wenigstens ein Bildschirm bzw. Monitor vorgesehen.

Über eine Datenschnittstelle 213 ist das Datenverarbeitungssystem 200 mit der Hauptsteuereinheit 140 oder direkt mit den Steuereinheiten 117, 127, 137 gekoppelt und kann so die einzelnen objektbezogenen Datensätze zur weiteren Verarbeitung und Analyse erhalten.

Hinsichtlich des Datenverarbeitungssystems 200 sei noch angemerkt, dass der Begriff "Prozessor" sich auf eine beliebige elektronische Einrichtung bzw. Schaltung oder einen Teil einer elektronischen Einrichtung bzw. Schaltung beziehen kann, welche(s) elektronische Daten aus Registern und/oder einem Speicher verarbeitet, um elektronische Daten in andere elektronische Daten umzusetzen bzw. aus Eingabedaten entsprechende Ausgabedaten zu erzeuge, die in Registern und/oder einem Speicher gespeichert werden können. Wie bereits angesprochen, kann das Datenverarbeitungssystem 200 einen Prozessor 201 oder mehrere Prozessoren umfassen.

Das Datenverarbeitungssystem 200 ist bevorzugt als Kombination aus Hardware, Firmware und Software realisiert. Entsprechend können hier beschriebenen Verfahren teilweise oder auch vollständig als auf einem maschinenlesbaren Medium gespeicherte Softwaremittel realisiert werden, die zur Durchführung in das Datenverarbeitungssystem 200 eingelesen und ausgeführt werden können. Ein maschinenlesbares Medium kann für einen beliebigen Mechanismus zum Speichern, Übertragen oder Empfangen von Information in einer von einem Computer lesbaren Form eingerichtet sein. Als nicht abschließende Beispiele seien hier Nur-Lese-Speicher (ROM), Direktzugriffsspeicher (RAM), Magnetspeicherplatten, optische Speichermedien, Flash-Speichermedien genannt. Schließlich können die Softwaremittel auch in Form eines Datenstroms als optische, akustische oder auf sonstige Art und Weise weitergeleitete Signale (z.B. als Trägerwellen, Infrarotsignale, digitale Signale usw.) vorliegen, die über entsprechende Schnittstellen, beispielsweise Antennen, die diese Signale aussenden und/oder empfangen, übertragen werden können.

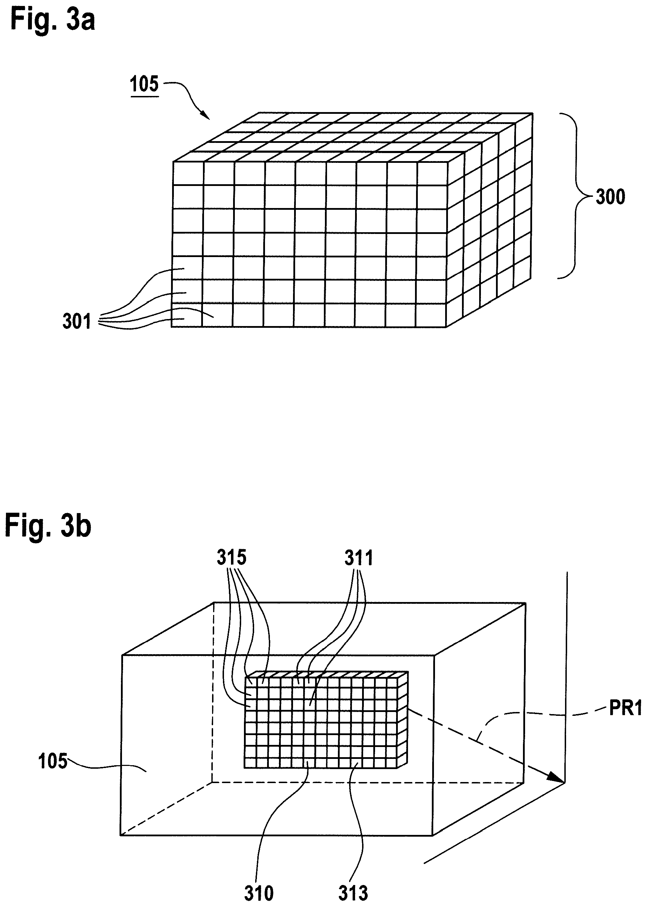

Anhand der Figuren 3a bis 3f wird nachstehend erläutert, wie gemäß dem ersten Aspekt ein für ein zu inspizierendes Objekt 104 akquirierter dreidimensionaler Datensatz mit ersten Materialgrößenwerten verwendet wird, um in dem Objekt 104 einen einer näheren Analyse zu unterwerfenden Prüfraum zu bestimmen, um danach auf den ersten Materialgrößenwerten basierende räumlich geometrische Werte des Prüfraums in einen zweidimensionalen Datensatz mit zweiten Materialgrößenwerten zur Bestimmung eines Prüfbereichs zu projizieren.

Ein Prüfraum wird beispielsweise dadurch bestimmt, dass ein Raumbereich im Inneren des Objekts 104 eine bestimmte Dichte und/oder einen bestimmten Massenschwächungskoeffizienten aufweist. Ein solcher Raumbereich, der für eine weitere Prüfung identifiziert wird, kann beispielsweise dadurch bestimmt sein, dass sich dort Material mit einer Dichte aus einem Bereich von 0,8 g/cm^3 bis 1,9 g/cm^3 befindet. In diesem Wertebereich für die Dichte liegen Sprengstoffe wie Dynamite, Schießpulver, Flüssigsprengstoffe (Gele), u.a. Substanzen, wie z.B. Trinitrotoluol (TNT), oder Bestandteile von Plastiksprengstoffen oder von als Foliensprengstoff ("Sheet Explosives") bekannten Sprengstoffformaten, wie z.B. Nitropenta, Hexogen, Cellulosenitrat oder dergleichen. Ein weiteres Beispiel für einen aus anderen Gründen interessanten Dichtebereich kann 0,8 g/cm^3 bis 1,2 g/cm^3 sein - hier finden sich Rauschmittel wie Kokain oder Heroin.

Figur 3a zeigt (stark vereinfacht) das Objekt 104 als einen Quader, der näherungsweise dem Koffer in der Figur 1 entspricht. Mittels der Röntgenprüfanlage 100 der Figur 1, genauer der darin befindlichen Röntgeneinheit 110, wird durch Anwendung eines Computertomografie (CT)-Verfahrens ein das Objekt 104 repräsentierender, dreidimensionaler Datensatz 300 mit ersten Materialgrößenwerten erzeugt.

Im Prinzip werden für das Objekt 104 entsprechend dem systembedingten Auflösungsvermögen der Röntgeneinheit 110 mittels bekannter zwei- und/oder dreidimensionaler Rekonstruktionsverfahren für eine Vielzahl einzelner isotroper Raumelemente bzw. Volumenelemente (Voxel) 301 des Objekts 104 ein der örtlichen Materialdichte und/oder dem örtlichen Massenschwächungskoeffizienten entsprechender erster Materialgrößenwert bestimmt. Zur Veranschaulichung ist in der Figur 3a das Objekt 104 in gleich große, isotrope Voxel 301 unterteilt; es versteht sich, dass in einer realen Umsetzung die Auflösung um Dimensionen höher ist, mithin ein einzelnes Voxel 301 um Dimensionen kleiner ist, z.B. Kantenlängen von 100 bis 10 Mikrometer aufweist.

Je nach Anwendungsszenario der Röntgenprüfanlage 100 werden Wertebereiche für bestimmte Materialdichtewerte und/oder Massenschwächungskoeffizientenwerte voreingestellt, sodass grundsätzlich solche Raumbereiche im Inneren des Objekts 104 erkannt, markiert bzw. ausgewählt werden können, die hinsichtlich des Prüfziels für eine nähere Analyse von Interesse sind.

D.h., bereits bei der Bestimmung des dreidimensionalen Datensatzes mittels CT-Verfahren erfolgt eine Vorauswahl hinsichtlich eines Prüfraums im Objekt 104. Mit anderen Worten dadurch, dass eine Auswahl bzw. Markierung eines Prüfraums (oder ggf. mehrerer Prüfräume) bereits während des CT-Verfahrens erfolgt, reduziert sich der Umfang der weiter durch das Datenverarbeitungssystem 200 zu verarbeitenden Voxel 301 des dreidimensionalen Datensatzes 300 deutlich. Dies führt zu einem insgesamt schnelleren Systemverhalten bzw. es wird weniger Rechenleistung benötigt.

Im vorliegenden Ausführungsbeispiel wird der Prüfraum 310 (Figur 3b) in dem das Objekt 104 repräsentierenden dreidimensionalen Datensatz 300 bestimmt, indem solche Voxel 311 ausgewählt bzw. markiert werden, denen jeweils ein erster, der örtlichen Materialdichte des Objekts 104 entsprechender, Materialgrößenwert aus einem vorbestimmten Wertebereich zugeordnet ist.

In Figur 3b ist der Prüfraum 310 für den Fall eines plattenförmigen Gegenstandes, für dessen Voxel 311 eine Materialdichte im Bereich 1,6 g/cm^3 bis 1,7 g/cm^3 bestimmt worden ist, dargestellt. Bei dem Prüfraum 310 könnte es sich um einen Foliensprengstoff handeln.

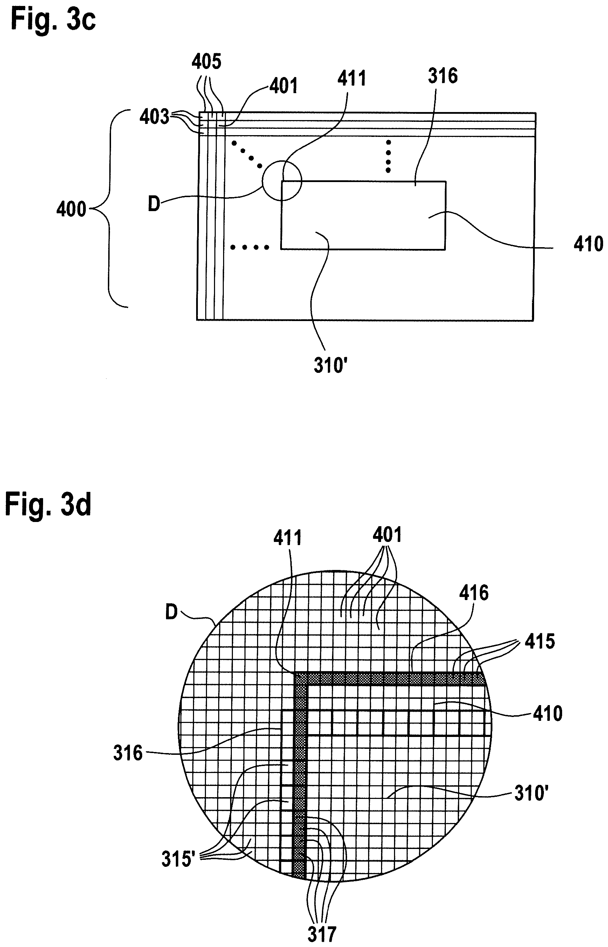

Figur 3c veranschaulicht einen zweidimensionalen Datensatz 400, bei dem basierend auf einer Flächenprojektion des Objekts 104, beispielsweise mit der Röntgeneinheit 120 bzw. 130 in eine vorbestimmte Projektionsrichtung PR1 bzw. PR2 (vgl. Figur 3b), jeweils ein, beispielsweise der effektiven Ordnungszahl $Z_{eff}$ entsprechender, zweiter Materialgrößenwert jedem einzelnen Flächenelement 401 zugeordnet wurde.

Der zweidimensionale Datensatz 400 wird mit der Röntgeneinheit 120 bzw. 130 erzeugt, indem aus zeilenweise mittels der Detektoreinheit 125 bzw. 135 gemessenen Intensitätswerten der zweidimensionale Datensatz für das Objekt 104 erstellt und im Datenverarbeitungssystem 200 zur weiteren Verarbeitung gespeichert wird. Datenelemente des zweidimensionalen Datensatzes 400 entsprechen Flächenelementen 401 denen jeweils der bestimmte zweite Materialgrößenwert zugeordnet ist.

Der zweite Materialgrößenwert wird mittels der Detektoren 126 bzw. 136 gemessenen Intensitätswerte bestimmt. Im Ausführungsbeispiel wird hierzu für jedes Flächenelement 401 der Wert der effektiven Ordnungszahl $Z_{eff}$ des an dieser Stelle durchstrahlten Materials bestimmt. Dies wird mittels einem bekannten Mehrenergie- bzw. Dual-Energy-Verfahren jeweils aus zwei für jedes Flächenelement 401 gemessenen Intensitätswerten für jeweils einen hohe und einen niedrigen Energiebereich der Röntgenstrahlen 123 bzw. 133 ermittelt.

In der Figur 3c ist der zweidimensionale Datensatz 400 als Flächenprojektionsbild des Objekts 104 dargestellt. Entsprechend könnten die ermittelten zweiten Materialgrößenwerte, beispielsweise auf einem Bildschirm, mittels zugeordneter Graustufenwerte oder Farbwerte dargestellt werden.

In den zweidimensionalen Datensatz 400 der Figur 3c wurde entsprechend z.B. der Projektionsrichtung PR1 (Figur 3b) der Prüfraum 310 projiziert, um einen mit dem Prüfraum 310 korrespondierenden Prüfbereich 410 zu bestimmen. Der Rand 316 der Projektion 310' des Prüfraums 310 geht im Ausführungsbeispiel auf die am Rand der Projektion 310' des Prüfraums 310 liegenden Voxel 315 (vgl. Figur 3b) zurück.

In dem mittels der Projektion 310' selektierten bzw. markierten Prüfbereich 410 kann sich ein Gegenstand, dessen Material die mit der Röntgeneinheit 110 bestimmten Materialdichtewerte aufweist, befinden, der gemäß dem gewählten Beispiel möglicherweise ein Foliensprengstoff sein könnte. Die Projektion 310' ist eine Abbildung des Prüfraums 310 aus dem dreidimensionalen Datensatz 300 in den zweidimensionalen Datensatz 400 und markiert den weiter zu analysierenden Prüfbereich 410. Mittels der Projektion 310' werden also Flächenelemente 401 des zweidimensionalen Datensatzes 400 für eine weitere Überprüfung selektiert bzw. bestimmt.

Die derart selektierten Flächenelemente 401, die den Prüfbereich 410 bestimmten, können beispielsweise durch eine entsprechende Zuordnung bzw. Übertragung der ersten Materialgrößenwerte der projizierten Voxel zu den entsprechenden Flächenelementen markiert werden.

Gemäß einem weiteren Aspekt werden bei der Projektion des Prüfraums 310 Werte abgeleitet, die jeweils einer räumlich geometrischen Größe, beispielsweise der Materialdicke des Prüfraums 310 in der zugehörigen vorbestimmten Projektionsrichtung PR1 bzw. PR2 entsprechen. Der mittels des Computertomographieverfahrens erfasste Prüfraum 310 setzt sich aus einer Vielzahl von Raumelementen (Voxel) zusammen. Der Prüfraum 310 wird in die vorbestimmte Projektionsrichtung PR1 bzw. PR2 auf eine Fläche projiziert. Dies führt jeweils zu einer Projektion 310'. Jedem Flächenelement der Projektion 310' kann ein zu dem Flächenelement senkrecht stehender Normalvektor definiert werden, dessen Richtung der Projektionsrichtung PR1 bzw. PR2 entspricht. Ausgehend von jedem Flächenelement kann damit eine in der Projektionsrichtung PR1 bzw. PR2 verlaufende Gerade konstruiert werden, die den Prüfraum 310 in der Projektionsrichtung PR1 bzw. PR2 verläuft. Der jeweilige Geradenabschnitt, der jeweils im Inneren des Prüfraums 310 verläuft, entspricht der oben genannten räumlich geometrischen Größe, d.h. der Materialdicke des Prüfraums 310 im Bereich des zugehörigen Flächenelements.

Wie bereits besprochen, ist allen Flächenelementen 401 des zweidimensionalen Datensatzes 400 jeweils der zweite Materialgrößenwert, hier der Wert für $Z_{eff}$, zugeordnet worden. Durch die den Prüfbereich 410 selektierende bzw. markierende Projektion 310' wurde den zum Prüfbereich 410 gehörigen Flächenelementen der erste Materialgrößenwert und die abgeleitete räumlich geometrische Größe zugeordnet bzw. übertragen. D.h., jedem Datenelement des Prüfbereichs 410 des zweidimensionalen Datensatzes 400 ist somit ein erster Materialgrößenwert, ein zweiter Materialgrößenwert sowie eine basierend auf dem ersten Materialgrößenwert und der Projektionsrichtung abgeleitete, räumlich geometrische Größe zugeordnet worden. In Kenntnis dieser Informationen über den Prüfbereich 410 kann eine Bestimmung des tatsächlich im Prüfbereich 410 vorhandenen Materials, d.h. eine Klassifizierung des Prüfbereichs erfolgen.

Die räumliche Auflösung des ersten, dreidimensionalen Datensatzes 300 ist unterschiedlich zur, insbesondere üblicherweise geringer als die Auflösung des zweiten, zweidimensionalen Datensatzes 400. Damit erfasst die Projektion 310' des Prüfraums 310 nicht exakt nur solche Flächenelemente die tatsächlich in den Prüfbereich 410 gehören. Auch werden möglicherweise dem Prüfbereich 410 zugehörige Flächenelemente nicht erfasst. Dies führt im Wesentlichen dazu, dass der Rand 316 der Projektion 310' des Prüfraums 310 nicht immer genau mit dem tatsächlichen Rand 416 des Prüfbereichs 410 übereinstimmt.

Eine weitere Ursache für die Abweichung der Ränder 316 und 416 kann durch technische Abweichungen der Röntgeneinheiten 110, 120 bzw. 130 hervorgerufen sein. Auch kann dies durch eine fehlerhafte Segmentierung des Gegenstandes im dreidimensionalen Datensatz hervorgerufen werden; dies kann beispielsweise dadurch hervorgerufen werden, dass ein Klumpen eines gesuchten, d.h. zu detektierenden, Materials von einem plattenförmigen Metall überdeckt wird. Eine weitere Ursache kann sein, dass bei der CT-Röntgeneinheit 110 die Röntgenstrahlen von der punktförmige Strahlungsquelle 112 ausgehen, sodass der Strahlenfächer 113 entsprechend divergiert und sich eine örtlich unterschiedliche Detektionsauflösung im Inspektionsbereich 114 ergibt. Die vorstehend geschilderte Abweichung der Ränder ist anhand des Details D aus der Figur 3c in der Figur 3d vereinfacht dargestellt. Als Bezugspunkt ist in den Figuren 3c bis 3f das die linke obere Ecke des tatsächlichen Prüfbereichs bildende Flächenelement 411 markiert.

Zur leichteren Darstellung wurde für das Ausführungsbeispiel angenommen, dass die Auflösung der Projektion 310' des Prüfraums 310 etwa halb so groß ist wie die Auflösung des zweidimensionalen Datensatzes 400. Im Ausführungsbeispiel sind daher Projektionselemente 315' als Quadrate dargestellt, welche die doppelte Größe der Flächenelemente 401 des zweidimensionalen Datensatzes 400 aufweisen. Die Projektionselemente 315' entsprechen in etwa dem Ergebnis der Projektion eines jeweiligen am Rand des Prüfraums 310 liegenden Voxel 315 in den zweidimensionalen Datensatz 400; dies ist eine zur leichteren Darstellung angenommene starke Vereinfachung, die dem Fachmann die hier geschilderten Prinzipien klar werden lässt und nicht an der tatsächlichen Umsetzung hindert.

Figur 3d zeigt den Rand 316 der Projektion 310', der durch die Projektionselemente 315' gebildet wird. Weiter ist ein Rand 416 gezeigt, der von schwarz ausgefüllten Flächenelementen 415 gebildet ist. Die Flächenelemente 415 sind solche, die alle im Wesentlichen einen bestimmten Wert der zweiten Materialgröße aufweisen, gemäß dem Ausführungsbeispiel näherungsweise den gleichen Wert für die effektive Atomzahl $Z_{eff}$ besitzen, und den tatsächlichen bzw. korrekten Rand des Prüfbereichs 410 bilden.

Gemäß einem zweiten Aspekt korrigiert das Datenverarbeitungssystem 200 den Rand 316 der Projektion 310' so, dass die Projektion 310' schließlich mit dem tatsächlichen Prüfbereich 410 übereinstimmt.

In einer ersten Randkorrektur-Prozedur werden allen den Rand 316 der Projektion 310' bildende Projektionselemente 315' daraufhin überprüft, ob deren zugeordnete Flächenelemente 401 zum tatsächlichen Prüfbereich 410 gehören. Dies wird mittels einer physikalischen Plausibilitätsbedingung geprüft. Hierzu wird überprüft, ob einem zugeordneten Flächenelement 401 ein zweiter Materialgrößenwert zugeordnet ist, der zu dem ersten Materialgrößenwert des Prüfraums 310 passt. Im vorliegenden Beispiel wäre beispielsweise ein $Z_{eff}$-Wert im Bereich 6,5 bis 7,5 im Hinblick auf die oben genannten Materialdichte im von Bereich 1,6 g/cm^3 bis 1,7 g/cm^3 plausibel. Wenn dies nicht der Fall ist, wie beispielsweise bei den Flächenelementen 317, werde diese als nicht zum Prüfbereich 410 gehörend angesehen. D.h., ein solches Flächenelement 317 ist aus der Projektion 310' zu entfernen.

Beispielsweise werden für solche Flächenelemente 317 im zweidimensionalen Datensatz 400 bereits zugeordnete erste Materialgrößenwerte bzw. die wenigstens eine davon abgeleitete räumlich geometrische Größe wieder gelöscht.

Die erste Randkorrektur-Prozedur wird solange wiederholt, bis es kein Flächenelement 317 mehr gibt, das einem den aktuellen Rand 316 der Projektion 310' bildendes Projektionselement 315' angehört und dem ein zweiter Materialgrößenwert zugeordnet ist, der nicht zu dem ersten Materialgrößenwert des Prüfraums 310 passt.

Im Ergebnis korrigiert die erste Randkorrektur-Prozedur den Rand der Projektion 310' mit Bezug auf den tatsächlichen Prüfbereich 410 von außen nach innen. D.h., der Rand der Projektion 310' wird soweit zurückgenommen, bis er mit dem Rand 416 des tatsächlichen Prüfbereichs 410 zusammenfällt.

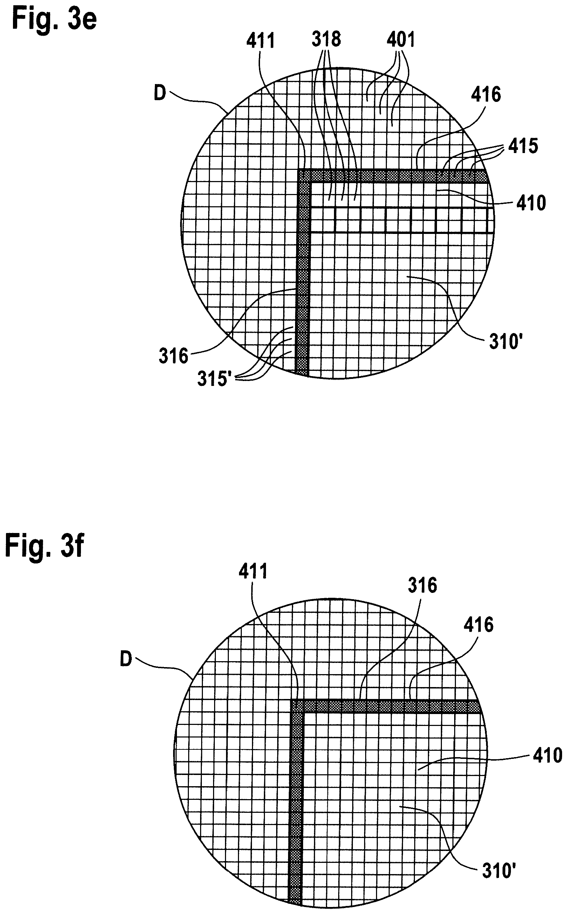

Figur 3e zeigt das Ergebnis der ersten Korrektur-Prozedur. Alle Flächenelemente 317 von Projektionselementen 315', welche außerhalb des tatsächlichen Prüfbereichs 410 lagen, wurden gelöscht. Somit wurde der Rand 316 der Projektion 310' auf den tatsächlichen durch die zweite Materialgröße bestimmten Rand des Prüfbereichs 410 berichtigt.

In einer zweiten Korrektur-Prozedur korrigiert das Datenverarbeitungssystem 200 nun den Rand 316 der Projektion 310', indem außerhalb der Projektion 310' am Rand liegende bzw. an den Rand bildende Projektionselemente 315' angrenzende Flächenelemente 418 wieder hinsichtlich der o.g. physikalischen Plausibilitätsbedingung überprüft werden. D.h., es wird geprüft, ob Flächenelementen 418 ein zweiter Materialgrößenwert zugeordnet ist, der zu dem ersten Materialgrößenwert passt. Wenn dies der Fall ist, dann wird ein solches Flächenelement 418 als zu dem Prüfbereich 410 zugehörig angesehen. D.h., ein solches Flächenelement 418 ist der Projektion 310' hinzuzufügen.

Im Ergebnis korrigiert die zweite Randkorrektur-Prozedur den Rand der Projektion 310' mit Bezug auf den tatsächlichen Prüfbereich 410 von innen nach außen. D.h., der Rand der Projektion 310' wird soweit ausgedehnt, bis er mit dem Rand 416 des tatsächlichen Prüfbereichs 410 zusammenfällt.

Beispielsweise kann solchen Flächenelementen 418 im zweidimensionalen Datensatz 400 dann jeweils ein entsprechender erster Materialgrößenwert bzw. die wenigstens eine davon abgeleitete räumlich geometrische Größe zugeordnet werden.

Die zweite Korrektur-Prozedur wird solange wiederholt, bis keine Flächenelemente 418 mehr auffindbar sind, d.h. solange bis kein an ein den aktuellen Rand 316 der Projektion 310' bildendes Projektionselement 315' von außen an die Projektion 310' angrenzendes Flächenelement mehr auffindbar ist, dem ein zweiter Materialgrößenwert zugeordnet ist, der zu dem ersten Materialgrößenwert des Prüfraums 310 passt.

Im Ergebnis wurde mit der zweiten Korrektur der Rand 316 der Projektion 310' auf den tatsächlichen durch die zweite Materialgröße bestimmten Rand 416 des tatsächlichen Prüfbereichs 410 ausgedehnt.

Es sei noch angemerkt, dass die Reihenfolge, in der die erste und die zweite Korrektur-Prozedur ausgeführt werden, beliebig ist. Die Korrektur-Prozeduren können aber auch gleichzeitig oder parallel durchgeführt werden.

Figur 3f zeigt das Ergebnis der zweiten Korrektur-Prozedur. Nun stimmt der Rand 316 der Projektion 310' mit dem Rand 416 des tatsächlichen Prüfbereichs 410 überein. Folglich entspricht die korrigierte Projektion 310' dem tatsächlichen Prüfbereich 410.

Gemäß einem weiteren Aspekt können Ränder des Prüfbereichs 410 alternativ oder zusätzlich durch das Datenverarbeitungssystem 200 durch Auswerten lokaler Materialdickenunterschiede zwischen benachbarten Flächenelementen korrigiert werden.

Hierfür können die mittels der Projektion 310' aus den ersten Materialgrößenwerten im ersten Datensatz 300 abgeleiteten räumlich geometrischen Größen ausgewertet werden. Wie oben diskutiert, kann die abgeleitete räumlich geometrische Größe die jeweilige Materialdicke des Prüfraums 310 in Projektionsrichtung PR1 bzw. PR2 sein. Dieser jeweilige Materialdickenwert wurde mit den jeweiligen Projektionselementen 315' auf Flächenelemente in der Projektion 310' übertragen.

Folglich kann der Prüfbereich mit einer dritten Korrektur-Prozedur korrigiert werden, wobei die Materialdickenwerte benachbarter Flächenelemente des Prüfbereichs 410 miteinander verglichen werden. Damit wird sichergestellt, dass es sich bei der untersuchten Änderung im Bild tatsächlich um einen Rand bzw. eine Dickenänderung am untersuchten Gegenstand handelt. Es wird jeweils das wahrscheinlichste Kantenelement zur Weiterverarbeitung herangezogen.

Gemäß einem weiteren Aspekt wird der korrigierte Prüfbereich 410 analysiert, um auf das darin tatsächlich vorhandene Material zu schließen; d.h. dem Ausführungsbeispiel entsprechend, mit der gewünschten Sicherheit auszuschließen, dass es sich um ein vermutetes Material mit Gefahrenpotenzial handelt oder eine weitere Kontrolle des Objekts 104 durch einen menschlichen Operator zu veranlassen.

Um auf das tatsächliche Material im Prüfbereich zu schließen, können die ersten Materialgrößenwerte und die zweiten Materialgrößenwerte sowie ggf. die abgeleiteten Materialdickenwerte unter Verwendung einer Kostenfunktion gewichtet werden. Als Parameter zur Bestimmung der Gewichte können einzelne oder mehrere der folgenden Parameter verwendet werden: die Qualität der einzelnen Messungen, der Rauschpegel der Daten, Materialgrößenwerte von in der vorbestimmten Projektionsrichtung PR1 bzw. PR2 hinter dem Prüfbereich 410 liegenden Materials, Materialgrößenwerten von in der vorbestimmten Projektionsrichtung PR1 bzw. PR2 vor dem Prüfbereich 410 liegenden Materials, die lokale Homogenität des zweidimensionalen Datensatzes.

Die Gesamtqualität $Q_{ges}$ kann auch als gewichtete Summe oder als Fuzzy-Gesamtbewertung einzelner Qualitätswerte $\alpha_i Q_i$ für $0 < i < 1$ durchgeführt werden, d.h.

$$Q_{ges} = \prod_0^l \alpha_i Q_i.$$

Gemäße einem weiteren Aspekt wertet das Datenverarbeitungssystem 200 wenigstens eine der folgenden Mengen statistisch aus: (i) die ersten Materialgrößenwerte, (ii) die zweiten Materialgrößenwerte, und (iii) die Materialdickenwerten im korrigierten Prüfbereich 410.

Dabei werden die jeweiligen Werte jeweils mittels einer Histogramm-Darstellung analysiert und jeweils der häufigste Wert aller Flächenelemente 401 im Prüfbereich 410 wird allen Flächenelementen 401 im Prüfbereich 410 zugewiesen. Das hat genau dann Vorteile, wenn nicht alle untersuchten Randbereiche tatsächlich am gleichen Gegenstand bzw. dessen Rand liegen. Sind falsche Ränder in der Auswertung enthalten, so stören diese durch die Histogramm-Bildung die Auswertung in geringerem Maße als bei einer direkten Mittelwertbildung. Die Histogramm-Analyse ist hier besonders tolerant gegenüber einzelnen Fehlern (z. B. Überlagerungen von anderen Materialien).

Wie bereits angesprochen (vgl. Figur 1) ist die Prüfanlage 100 eingerichtet, mehr als einen zweidimensionalen Datensatz 400 für verschiedene Projektionsrichtungen PR1, PR2 zu erzeugen. Entsprechend können für jede Projektion aus dem dreidimensionalen Datensatz 300 für den Prüfraum 310 Werte abgeleitet werden, die den jeweiligen lokalen Materialdicken des Prüfraums 310 entsprechen. Entsprechend können mehrere Flächenprojektionen gemeinsam zur Ermittlung des Materials im Prüfbereich ausgewertet werden. Entsprechend kann jede Flächenprojektion Teil der statistischen Auswertung sein.

Um auf das im Prüfbereich 410 tatsächlich vorhandene Material zu schließen, wird der Prüfbereich 410 basierend auf der Größe des Prüfbereichs 410, dem durchschnittlichen Wert der ersten Materialgrößenwerte und dem Prüfbereich 410 zugewiesenen zweiten Materialgrößenwert klassifiziert. Dazu werden die Materialgrößenwerte mit den Erwartungswerten für bekannte Materialien verglichen. Sind sie in einem vordefinierten Intervall rund um den Zielwert enthalten, wird auf den Materialwert geschlossen. Entsprechend wird von der Anlage bzw. dem Verfahren die Entscheidung Alarm/Nicht-Alarm getroffen.

Für den Fall, dass das Datenverarbeitungssystem 200 nicht mit der voreingestellten Sicherheit ausschließen kann, dass im Prüfbereich Materialien mit Gefährdungspotenzial vorhanden sind, kann eine grafische Darstellung des Prüfbereichs 410 auf einem Ausgabemittel des Datenverarbeitungssystems 200 für eine Sichtüberprüfung durch einen Operator erfolgen. Ist mittels der Sichtprüfung ebenfalls keine abschließende Beurteilung des Prüfbereichs 410 möglich, kann das Datenverarbeitungssystem 200 eine manuelle Überprüfung empfehlen bzw. auslösen.

## Patentansprüche

1. Verfahren zur zerstörungsfreien Inspektion eines Objekts (104), wobei das Objekt (104) mit elektromagnetischer Strahlung (113, 123, 133) durchstrahlt wird und Intensitätswerte nicht absorbierter Strahlen gemessen und ausgewertet werden, wobei das Verfahren die folgenden Schritten aufweist:

   - Erzeugen eines dreidimensionalen Datensatzes (300), in dem einzelnen Raumelementen (301) des Objektes (104) jeweils die bzw. der einer ersten Materialeigenschaft des Objekts (104) entsprechende Materialdichte und/oder Massenschwächungskoeffizient als einen ersten Materialgrößenwert mittels einer ersten Röntgeneinheit (110), die zur Durchführung eines Computertomografieverfahrens eingerichtet ist, zugeordnet ist;
   - Bestimmen, in dem das Objekt (104) repräsentierenden dreidimensionalen Datensatz (300), eines Prüfraums (310) mit Raumelementen (301), deren erster Materialgrößenwert in einem vorbestimmten Wertebereich liegt; und Bestimmen einer Projektion (310') des Prüfraums (310), entsprechend einer vorbestimmten Projektionsrichtung (PR1, PR2);
   - Erzeugen eines zweidimensionalen Datensatzes (400), in dem einzelnen Flächenelementen (401) des Objekts (104) jeweils die einer zweiten Materialeigenschaft des Objekts (104) entsprechende effektive Ordnungszahl zweiter Materialgrößenwert zugeordnet ist, basierend auf einer Flächenprojektion des Objekts (104) mit wenigstens einer zweiten Röntgeneinheit (120, 130), die zur Durchführung eines zweidimensionalen Mehrenergie-Röntgenverfahrens in der vorbestimmten Projektionsrichtung (PR1, PR2) eingerichtet ist;
   - Bestimmen eines Prüfbereichs (410) in dem zweidimensionalen Datensatz (400), indem die Projektion (310') des Prüfraums (310), der vorbestimmten Projektionsrichtung (PR1, PR2) entsprechend, in den zweidimensionalen Datensatz (400) berechnet wird;

   **gekennzeichnet durch**

   - Ableiten von Werten basierend auf dem dreidimensionalen Datensatz (300), die jeweils der Materialdicke des Prüfraums als einer räumlich geometrischen Größe des Prüfraums (310) in der vorbestimmten Projektionsrichtung (PR1, PR2) entsprechen; und
   - Zuordnen der abgeleiteten Werte der Materialdicke als der äumlich geometrischen Größe des Prüfraums (310) zu jeweils entsprechende Flächenelemente (401) des mittels der Projektion (310') bestimmten Prüfbereichs (410).

2. Verfahren gemäß Anspruch 1, wobei das Verfahren weiter aufweist: Korrigieren eines aktuellen Randes (316) der Projektion (310') im zweidimensionalen Datensatz durch

   - Überprüfen von Flächenelementen, die durch den Rand (316) bildende Projektionselemente (315') bestimmt sind, ob diesen jeweils ein solcher zweiter Materialgrößenwert zugeordnet ist, der zu dem ersten Materialgrößenwert aus dem vorbestimmten Wertebereich passt, und wenn dies nicht der Fall ist, dann Entfernen solcher Flächenelemente (317) aus der Projektion (310') und/oder
   - Überprüfen von Flächenelementen, die an den aktuellen Rand (316) bildende Projektionselemente (315') angrenzen, ob diesen jeweils ein solcher zweiter Materialgrößenwert zugeordnet ist, der zu dem ersten Materialgrößenwert aus dem vorbestimmten Wertebereich passt, wenn dies der Fall ist, dann Hinzufügen solcher Flächenelemente (318) zu der Projektion (310').

3. Verfahren gemäß Anspruch 1 oder 2, wobei das Verfahren weiter aufweist: Korrigieren der Ränder der Projektion (310') und/oder des Prüfbereichs (410) durch Auswerten lokaler Unterschiede bei der jeweils zugeordneten räumlich geometrischen Größe zwischen benachbarten Flächenelementen.

4. Verfahren gemäß einem der vorhergehenden Ansprüche, wobei das Verfahren weiter aufweist: Gewichten der ersten Materialgrößenwerte und der zweiten Materialgrößenwerte sowie der Werte der räumlich geometrischen Größe für Flächenelemente der Projektion (310') unter Verwendung einer Kostenfunktion, welche als Parameter wenigstens eines verwendet von: Qualität der einzelnen Messungen, Rauschpegel der Daten, Materialgrößenwerte von in der vorbestimmten Projektionsrichtung hinter dem Prüfbereich liegenden Materials, Materialgrößenwerten von in der vorbestimmten Projektionsrichtung vor dem Prüfbereich liegendem Material, lokale Homogenität des zweidimensionalen Datensatzes.

5. Verfahren gemäß einem der vorhergehenden Ansprüche, wobei das Verfahren weiter aufweist: Statistisches Auswerten wenigstens eines von den ersten Materialgrößenwerten, den zweiten Materialgrößenwerten und den Werten für die räumlich geometrische Größe für Flächenelemente der Projektion (310'), wobei die Werte - bevorzugt basierend auf einer Histogramm-Auswertung - analysiert werden und jeweils der häufigste Wert allen Flächenelemente der Projektion (310') zugewiesen wird.

6. Verfahren gemäß einem der vorhergehenden Ansprüche, wobei alle Flächenprojektionen gemeinsam ausgewertet werden derart, dass alle Flächenprojektionen Teil der statistischen Auswertung sind.

7. Verfahren gemäß einem der vorhergehenden Ansprüche, wobei das Verfahren weiter aufweist: Klassifizieren des Prüfbereichs (410) basierend auf wenigstens eines von: einer Größe des Prüfbereichs (410), einem durchschnittlichen Wert der ersten Materialgrößenwerte, eines dem Prüfbereich (410) zugewiesenen Werts für die zweite Materialgröße.

8. Verfahren gemäß einem der vorhergehenden Ansprüche, wobei das Verfahren weiter aufweist: Anzeigen einer grafischen Darstellung des Prüfbereichs für eine Sichtüberprüfung.

9. Vorrichtung (100) zur zerstörungsfreien Inspektion eines Objekts (104), in der das Objekt (104) mit elektromagnetischer Strahlung durchstrahlt wird und Intensitäten nicht absorbierter Strahlen gemessen und ausgewertet werden, wobei die Vorrichtung (100) aufweist:

> eine erste Röntgeneinheit (110), die zur Durchführung eines Computertomografieverfahrens eingerichtet ist;
> wenigstens eine zweite Röntgeneinheit (120, 130), die zur Durchführung eines zweidimensionalen Mehrenergie-Röntgenverfahrens eingerichtet ist;
> ein Datenverarbeitungssystem (200), welches zur Durchführung eines Verfahrens gemäß einem der Ansprüche 1 bis 8 eingerichtet ist und dazu betriebsmäßig gekoppelt ist mit
> der ersten Röntgeneinheit (110) zur Erfassung des das Objekt (104) repräsentierenden dreidimensionalen Datensatzes mit Raumelementen (301), denen jeweils der erste, der örtlichen Materialdichte des Objekts (104) entsprechende, Materialgrößenwert zugeordnet ist, und
mit der wenigstens einen zweiten Röntgeneinheit (120, 130) zur Erfassung des zweidimensionalen Datensatzes mit Flächenelementen (401), denen jeweils der zweite, der effektiven Ordnungszahl durchstrahlten Materials entsprechende, Materialgrößenwert zugeordnet ist,
wobei der zweidimensionale Datensatz eine Flächenprojektion des Objekts (104) in einer vorbestimmten Projektionsrichtung (PR1, PR2) repräsentiert.

10. Vorrichtung (100) nach Anspruch 9, weiter aufweisend:

> - einen feststehenden Teil (101),
> - einen Strahlentunnel (102),
> - einer durch den Strahlentunnel (102) führenden Transporteinrichtung (105),
> - die erste Röntgeneinheit (110) mit einer an dem feststehenden Teil (101) gelagerten und um den Strahlentunnel (102) drehbaren Gantry (111), an der wenigstens eine erste Strahlungsquelle (112) für elektromagnetische Strahlung in einer Rotationsebene und eine der ersten Strahlungsquelle (112) gegenüberliegend angeordnete und zugeordnete Detektoreinheit (115) befestigt ist, und
> - die wenigstens eine zweite Röntgeneinheit (120, 130) mit wenigstens einer gegenüber dem Strahlentunnel (102) feststehend angeordneten zweiten Strahlungsquelle (122, 132) für elektromagnetische Strahlung und einer zugeordneten, feststehend angeordneten zweiten Detektoreinheit (125, 135).

11. Computerprogrammprodukt mit einem Computerprogramm, das Softwaremittel umfasst, die bewirken, dass die Vorrichtung nach Anspruch 9, das Verfahren nach einem der Ansprüche 1 bis 8 ausführt, wenn das Computerprogramm in einem Automatisierungssystem ausgeführt wird.

**Claims**

1. A method for the nondestructive inspection of an object (104), wherein electromagnetic radiation (113, 123, 133) is passed through the object (104) and intensity values of unabsorbed beams are measured and evaluated, the method comprising the following steps:

> - generating a three-dimensional data set (300) in which the local material density and/or the mass attenuation coefficient as a first material quantity value corresponding to a first material property of the object (104) is associated in each case with individual spatial elements (301) of the object (104) by means of a first X-ray unit (110) which is configured for carrying out a computed tomography method;

- determining an inspection space (310), in the three-dimensional data set (300) representing the object (104), which has spatial elements (301) whose first material quantity value is in a predetermined value range; and

- determining a projection (310') of the inspections space (310) corresdponding to a predetermined projection direction (PR1, PR2);

- generating a two-dimensional data set (400) in which the effective atomic number as a second material quantity value corresponding to a second material property of the object (104) is associated in each case with individual surface elements (401) of the object (104), based on a surface projection of the object (104) by means of at least a second X-ray unit (120, 130) which is configured to carry out a two-dimensional multi-energy X-ray method in the predetermined projection direction (PR1, PR2);

- determining an inspection area (410) in the two-dimensional data set (400) by computing the projection (310') of the inspection space (310) into the two-dimensional data set (400), corresponding to the predetermined projection direction (PR1, PR2);

**characterized in that**

- deriving values, based on the three-dimensional data set (300) which in each case correspond to the material thickness of the inspection space (310) as a spatial geometric quantity of the inspection space (310) in the predetermined projection direction (PR1, PR2); und

- associating of the derived values of the material thickness as the spatial geometric quantity of the inspection space (310) to resepctive corresponding surface elements (401) of the inspection area (410) determined by the projection (310').

2. The method according to claim 1, wherein the method further comprises: correcting an instantaneous border (316) of the projection (310') in the two-dimensional data set by

- checking surface elements, which are determined by the projection elements (315') that form the border (316), as to whether such a second material quantity value, which matches the first material quantity value from the predetermined value range, is associated in each case with the surface elements, and if this is not the case, removing such surface elements (317) from the projection (310') and/or

- checking surface elements, which adjoin projection elements (315') that form the instantaneous border (316), as to whether such a second material quantity value, which matches the first material quantity value from the predetermined value range, is associated in each case with the surface elements, and if this is the case, adding such surface elements (318) to the projection (310').

3. The method according to claim 1 or 2, wherein the method further comprises: correcting the borders of the projection (310') and/or of the inspection region (410) by evaluating local differences in the associated spatial geometric quantity in each case between adjacent surface elements.

4. The method according to one of the preceding claims, wherein the method further comprises: weighting the first material quantity values and the second material quantity values as well as the values of the derived spatial geometric quantity for surface elements of the projection (310'), using a cost function which utilizes at least one of the following as parameter(s): quality of the individual measurements, noise level of the data, material quantity values of material situated behind the inspection space in the predetermined projection direction, material quantity values of material situated in front of the inspection space in the predetermined projection direction, and local homogeneity of the two-dimensional data set.

5. The method according to one of the preceding claims, wherein the method further comprises: statistically analyzing at least one of the first material quantity values, the second material quantity values, and the values of the spatial geometric quantity for surface elements of the projection (310'), wherein the values are analyzed, - preferably based on a histogram analysis -- and in each case the most frequent value is assigned to all surface elements of the projection (310').

6. The method according to one of the preceding claims, wherein all surface projections are evaluated together in such a way that all surface projections are part of the statistical analysis.

7. The method according to one of the preceding claims, wherein the method further comprises: classifying the inspection region (410) based on at least one of the following: a size of the inspection region (410), an average value of the first material quantity values, and a value of the second material quantity assigned to the inspection region (410).

8. The method according to one of the preceding claims, wherein the method further comprises: displaying a graphical depiction of the inspection region for a visual inspection.

9. A device (100) for the nondestructive inspection of an object (104), in which electromagnetic radiation is passed through the object (104) and intensities of unabsorbed beams are measured and evaluated, the device (100) comprising:

a first x-ray unit (110) configured to carry out a computed tomography method;
at least one second X-ray unit (120, 130) configured to carry out a two-dimensional multi-energy X-ray method;
a data processing system (200) which is configured to carry out a method according to one of the claims 1 to 8 and to this effect is operationally coupled to
the first X-ray unit (110) for acquiring the three-dimensional data set which represents the object (104), containing spatial elements (301) with which the first material quantity, which corresponds to the local material density of the object (104), is associated in each case, and
the at least one second X-ray unit (120, 130) for acquiring a two-dimensional data set containing surface elements (401) with which the second material quantity which corresponds to an effective atomic number of irradiated material is associated in each case,
wherein the two-dimensional data set represents a surface projection of the object (104) in a predetermined projection direction (PR1, PR2).

10. The device (100) according to claim 9, further comprising:

- a stationary portion (101),
- a radiation tunnel (102),
- a transport device (105) which leads through the radiation tunnel (102),
- the first X-ray unit (110) having a gantry (111) that is supported on the stationary portion (101) and rotatable about the radiation tunnel (102), and to which at least one first radiation source (112) for electromagnetic radiation in a plane of rotation, and an associated detector unit (115) situated opposite from the first radiation source (112), are fastened, and
- the at least one second X-ray unit (120, 130) having at least one second radiation source (122, 132) for electromagnetic radiation, fixedly situated opposite from the radiation tunnel (102), and an associated fixedly situated second detector unit (125, 135).

11. A computer program product with a computer program having software means causing the device according to claim 9 to carry out the method according to one of claims 1 to 8 when the computer program is executed in an automation system.

## Revendications

1. Procédé d'inspection non destructive d'un objet (104), cependant que l'objet (104) est traversé par un rayonnement électromagnétique (113, 123, 133) et que des valeurs d'intensité de rayons non absorbés sont mesurées et évaluées, cependant que le procédé comporte les étapes suivantes :

- génération d'un jeu de données tridimensionnel (300) dans lequel, à des éléments spatiaux (301) distincts de l'objet (104), respectivement la densité de matériau et/ou le coefficient d'atténuation massique correspondant à une première propriété du matériau de l'objet (104) est affecté(e) en tant qu'une première valeur de grandeur de matériau au moyen d'une première unité de radiographie (110) conçue pour la réalisation d'un procédé de tomographie par ordinateur ;
- détermination, dans le jeu de données tridimensionnel (300) représentant l'objet (104), d'un espace d'examen (310) ayant des éléments spatiaux (301) dont la première valeur de grandeur de matériau se situe dans une plage de valeurs prédéterminée ; et
- détermination d'une projection (310') de l'espace d'examen (310) en correspondance avec une direction de projection (PR1, PR2) prédéterminée ;
- génération d'un jeu de données bidimensionnel (400) dans lequel, à des éléments de surface (401) de l'objet (104) distincts, respectivement le numéro atomique effectif de deuxième valeur de grandeur de matériau, correspondant à une deuxième propriété du matériau de l'objet (104), est affecté, sur la base d'une projection de surface de l'objet (104), avec au moins une deuxième unité de radiographie (120, 130) conçue pour la réalisation d'un procédé de radiographie bidimensionnel multi énergies dans la direction de projection (PR1, PR2) prédéterminée ;
- détermination d'une zone d'examen (410) dans le jeu de données bidimensionnel (400), ce qui a lieu en ce que la projection (310') de l'espace d'examen (310) est, en correspondance avec la direction de projection (PR1, PR2) prédéterminée, calculée dans le jeu de données bidimensionnel (400) ;

**caractérisé par**

- déduction de valeurs, sur la base du jeu de données tridimensionnel (300), lesquelles correspondent respectivement à l'épaisseur de matériau de l'espace d'examen en tant qu'une grandeur de l'espace d'examen (310) spatialement géométrique dans la direction de projection (PR1, PR2) prédéterminée ; et
- affectation des valeurs déduites de l'épaisseur de matériau en tant que la grandeur spatialement géométrique de l'espace d'examen (310) à des éléments de surface (401) respectivement correspondants de la zone d'examen (410) déterminée au moyen de la projection (310').

2. Procédé selon la revendication 1, cependant que le procédé comporte en outre : correction d'un bord actuel (316) de la projection (310') dans le jeu de données tridimensionnel par

- vérification d'éléments de surface déterminés par des éléments de projection (315') constituant le bord (316), afin de discerner si respectivement une deuxième valeur de grandeur de matériau allant avec la première valeur de grandeur de matériau de la plage de valeurs prédéterminée leur est affectée, et, si cela n'est pas le cas, alors enlèvement de tels éléments de surface (317) de la projection (310'), et/ou
- vérification d'éléments de surface adjacents aux éléments de projection (315') constituant le bord actuel (316), afin de discerner si respectivement une deuxième valeur de grandeur de matériau allant avec la première valeur de grandeur de matériau de la plage de valeurs prédéterminée leur est affectée, et, si cela est le cas, alors ajout de tels éléments de surface (318) à la projection (310').

3. Procédé selon la revendication 1 ou 2, cependant que le procédé comporte en outre :
correction des bords de la projection (310') et/ou de la zone d'examen (410) par évaluation de différences locales, quant à la grandeur spatialement géométrique respectivement affectée, entre des éléments de surface adjacents.

4. Procédé selon une des revendications précédentes, cependant que le procédé comporte en outre : pondération des premières valeurs de grandeur de matériau et des deuxièmes valeurs de grandeur de matériau ainsi que des valeurs de la grandeur spatialement géométrique pour des éléments de surface de la projection (310') en utilisant une fonction de coût, laquelle utilise en tant que paramètre au moins un de : qualité des mesures distinctes, niveau de bruit des données, valeurs de grandeur de matériau de matériau se trouvant, dans la direction de projection prédéterminée, derrière la zone d'examen, valeurs de grandeur de matériau de matériau se trouvant, dans la direction de projection prédéterminée, avant la zone d'examen, homogénéité locale du jeu de données bidimensionnel.

5. Procédé selon une des revendications précédentes, cependant que le procédé comporte en outre : évaluation statistique d'au moins une des premières valeurs de grandeur de matériau, des deuxièmes valeurs de grandeur de matériau et des valeurs de la grandeur spatialement géométrique pour des éléments de surface de la projection (310'), cependant que les valeurs - de préférence sur la base d'une évaluation d'histogramme - sont analysées, et que respectivement la valeur la plus fréquente est attribuée à tous les éléments de surface de la projection (310').

6. Procédé selon une des revendications précédentes, cependant que toutes les projections de surface sont de telle façon évaluées communément que toutes les projections de surface font partie de l'évaluation statistique.

7. Procédé selon une des revendications précédentes, cependant que le procédé comporte en outre : classification de la zone d'examen (410) sur la base d'au moins une de : une grandeur de la zone d'examen (410), une valeur moyenne de la première valeur de grandeur de matériau, une valeur attribuée à la zone d'examen (410) pour la deuxième grandeur de matériau.

8. Procédé selon une des revendications précédentes, cependant que le procédé comporte en outre : affichage d'une représentation graphique de la zone d'examen pour une vérification visuelle.

9. Dispositif (100) d'inspection non destructive d'un objet (104), dans lequel l'objet (104) est traversé par un rayonnement électromagnétique et des intensités de rayons non absorbés sont mesurées et évaluées, cependant que le dispositif (100) comporte :

une première unité de radiographie (110) conçue pour la réalisation d'un procédé de tomographie par ordinateur ;
au moins une deuxième unité de radiographie (120, 130) conçue pour la réalisation d'un procédé de radiographie bidimensionnel multi énergies ;
un système de traitement des données (200) conçu pour la réalisation d'un procédé selon une des revendications de 1 à 8 et couplé fonctionnellement à cet effet à

la première unité de radiographie (110) pour la saisie du jeu de données tridimensionnel représentant l'objet (104), avec des éléments spatiaux (301) auxquels respectivement la première valeur de grandeur de matériau, correspondant à la densité de matériau de l'endroit de l'objet (104), est affectée, et

avec la au moins une deuxième unité de radiographie (120, 130) pour la saisie du jeu de données bidimensionnel, avec des éléments de surface (401) auxquels respectivement la deuxième valeur de grandeur de matériau, correspondant au numéro atomique effectif de matériau traversé par le rayonnement, est affectée, cependant que le jeu de données bidimensionnel représente une projection de surface de l'objet (104) dans une direction de projection (PR1, PR2) prédéterminée.

10. Dispositif (100) selon la revendication 9, comportant en outre :

   - une partie fixe (101),
   - un tunnel de rayonnement (102),
   - un équipement de transport (105) guidant à travers le tunnel de rayonnement (102),
   - la première unité de radiographie (110) dotée d'un portique (111) logé à la partie fixe (101) et pouvant tourner autour du tunnel de rayonnement (102), à laquelle au moins une première source de rayonnement (112) pour rayonnement électromagnétique est fixée dans un plan de rotation et une unité de détecteur (115) agencée en vis-à-vis de la première source de rayonnement (112) et affectée à elle est fixée, et
   - la au moins une deuxième unité de radiographie (120, 130) dotée d'au moins une deuxième source de rayonnement (122, 132) pour rayonnement électromagnétique, agencée de manière fixe en vis-à-vis du tunnel de rayonnement (102), et d'une deuxième unité de détecteur (125, 135) affectée agencée de manière fixe.

11. Produit programme d'ordinateur ayant un programme d'ordinateur qui comprend des moyens logiciels qui ont pour effet que le dispositif selon la revendication 9 exécute le procédé selon une des revendications de 1 à 8 quand le produit programme d'ordinateur est exécuté dans un système d'automatisation.

**Fig. 1**

EP 3 094 995 B1

# Fig. 2

# Fig. 3a

# Fig. 3b

## Fig. 3c

## Fig. 3d

## Fig. 3e

## Fig. 3f

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10149254 A1
- US 7362847 B2
- US 7324625 B2
- US 20050180542 A1
- US 7023957 B2
- US 20050058242 A1
- WO 0042566 A1
- WO 2012110898 A2
- EP 1186909 A2